(19) Europäisches Patentamt / European Patent Office / Office européen des brevets

(11) **EP 4 199 405 B1**

(12) **EUROPEAN PATENT SPECIFICATION**

(45) Date of publication and mention of the grant of the patent:
**22.01.2025 Bulletin 2025/04**

(21) Application number: **20950752.4**

(22) Date of filing: **27.08.2020**

(51) International Patent Classification (IPC):
**H04L 5/00** (2006.01)    **H04L 27/26** (2006.01)

(52) Cooperative Patent Classification (CPC):
**H04L 5/0051; H04L 5/0007; H04L 27/2613**

(86) International application number:
**PCT/CN2020/111923**

(87) International publication number:
**WO 2022/041081 (03.03.2022 Gazette 2022/09)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2023 Bulletin 2023/25**

(73) Proprietor: **Huawei Technologies Co., Ltd.**
**Shenzhen, Guangdong 518129 (CN)**

(72) Inventors:
• **YU, Jian**
  **Shenzhen, Guangdong 518129 (CN)**
• **GUO, Zhiheng**
  **Shenzhen, Guangdong 518129 (CN)**
• **SU, Liyan**
  **Shenzhen, Guangdong 518129 (CN)**
• **LU, Shaozhong**
  **Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
EP-A1- 3 487 102    WO-A1-2017/035807
CN-A- 107 431 682    CN-A- 110 890 948
CN-A- 111 052 662

• **INTEL CORPORATION: "Further discussion on SRS for NR"**, vol. RAN WG1, no. Spokane, USA; 20170116 - 20170120, 16 January 2017 (2017-01-16), XP051207893, Retrieved from the Internet <URL:http://www.3gpp. org/ftp/Meetings_3GPP_SYNC/RAN1/Docs/> [retrieved on 20170116]
• **ERICSSON: "Concatenated block RS design"**, vol. RAN WG1, no. Reno, USA; 20161114 - 20161118, 13 November 2016 (2016-11-13), XP051176276, Retrieved from the Internet <URL:http://www.3gpp. org/ftp/Meetings_3GPP_SYNC/RAN1/Docs/> [retrieved on 20161113]
• **NEC: "Discussion on IFDMA based scheme"**, vol. RAN WG1, no. Gothenburg, Sweden; 20160822 - 20160826, 12 August 2016 (2016-08-12), XP051141889, Retrieved from the Internet <URL:http://www.3gpp. org/ftp/tsg_ran/WG1_RL1/TSGR1_86/Docs/> [retrieved on 20160812]
• **INTEL CORPORATION: "UL data transmission without grant"**, vol. RAN WG1, no. Prague, Czech Republic; 20170821 - 20170825, 20 August 2017 (2017-08-20), XP051315408, Retrieved from the Internet <URL:http://www.3gpp. org/ftp/Meetings_3GPP_SYNC/RAN1/Docs/> [retrieved on 20170820]

- HUAWEI ET AL: "UL DMRS design for data transmission", vol. RAN WG1, no. Hangzhou, China; 20170515 - 20170519, 14 May 2017 (2017-05-14), XP051272165, Retrieved from the Internet <URL:http://www.3gpp.org/ftp/Meetings_3GPP_SYNC/RAN1/Docs/> [retrieved on 20170514]
- INTEL CORPORATION: "On the remaining details of UL DM-RS", 3GPP DRAFT; R1-1712560 ON THE REMAINING DETAILS OF UL DM-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, P.R. Czech; 20170821 - 20170825, 20 August 2017 (2017-08-20), Mobile Competence Centre ; 650, route des Lucioles ; F-06921 Sophia-Antipolis Cedex ; France
, XP051315376

Description

## TECHNICAL FIELD

Embodiments of this application relate to the field of communication technologies, and in particular, to a communication method and apparatus.

## BACKGROUND

In an existing mobile communication system, a maximum quantity of multiplexing layers of an orthogonal demodulation reference signal (demodulation reference signal, DMRS) port supported by the system is limited. Using a new radio (New radio, NR) radio access technology as an example, when a cyclic prefix-orthogonal frequency division multiplexing (cyclic prefix-orthogonal frequency division multiplexing, CP-OFDM) waveform is used for uplink or downlink communication, the CP-OFDM waveform may support two DMRS configurations, that is, a configuration type 1 (configuration type 1) and a configuration type 2 (configuration type 2). In the configuration type 1 (configuration type 1), the system supports multiplexing of a maximum of eight layers of orthogonal DMRS ports; and in the configuration type 2 (configuration type 2), the system supports multiplexing of a maximum of twelve layers of orthogonal DMRS ports. In addition, the system further supports a discrete fourier transform-spread-orthogonal frequency division multiplexing (discrete fourier transform-spread-orthogonal frequency division multiplexing, DFT-S-OFDM) waveform. By default using the DMRS configuration type 1, the system supports multiplexing of a maximum of eight layers of orthogonal DMRS ports.

In addition, with the development of mobile communication and the emergence of new services, there is an increasing demand for a high rate. Increasing a quantity of transmission layers for multi-user pairing helps increase a system throughput. However, as the quantity of transmission layers increases, orthogonal DMRS ports may be insufficient. When a network device performs multi-user pairing on a terminal device, if a total quantity of actually paired layers exceeds a quantity of orthogonal DMRS ports supported by the system, inter-layer interference is introduced between the DMRS ports.

Therefore, how to avoid the inter-layer interference between the DMRS ports caused by an excessively large quantity of transmission layers between the terminal device and the network device is a problem that needs to be resolved currently.

Intel Corporation "Further discussion on SRS for NR" 3GPP Draft; RI-1700356 discusses issues involved in designing the sounding reference signal, SRS, for new radio multiple-input and multiple-output, NR MIMO.

## SUMMARY

Embodiments of this application provide a communication method and apparatus, to reduce inter-layer interference between DMRS ports caused by an excessively large quantity of transmission layers between a terminal device and a network device. To achieve the foregoing objective, embodiments of this application provide the following technical solutions:

According to a first aspect, a communication method is provided. The method includes: a receiving device receives a first DMRS from a first demodulation reference signal DMRS port by using a first time-frequency resource, and receives a second DMRS from a second DMRS port by using a second time-frequency resource, where the first time-frequency resource is a part of time-frequency resources in the second time-frequency resource, and an orthogonal cover code OCC of the first DMRS is orthogonal to an OCC corresponding to the first time-frequency resource in an OCC of the second DMRS.

In the foregoing method in this application, first, because the first time-frequency resource occupied by the first DMRS transmitted from the first DMRS port is a part of time-frequency resources in the second time-frequency resource, additional overheads of the time-frequency resource do not need to be separately allocated to the first DMRS port. In addition, because the OCC of the first DMRS is orthogonal to the OCC corresponding to the first time-frequency resource in the OCC of the second DMRS, interference between the first DMRS port and the second DMRS port may be avoided. Further, when the second DMRS port is one of a maximum of eight orthogonal DMRS ports supported by a system in a configuration type 1 in the conventional technology or one of a maximum of twelve orthogonal DMRS ports supported by a system in a configuration type 2, because in this application, the OCC of the first DMRS transmitted from the first DMRS port may be orthogonal to the OCC corresponding to the second DMRS, no interference is caused to information transmission on the second DMRS port, so that an effect of adding a new orthogonal DMRS port based on the maximum of eight orthogonal DMRS ports supported by the system in the configuration type 1 or the maximum of twelve orthogonal DMRS ports supported by the system in the configuration type 2 in the conventional technology may be achieved. Therefore, the inter-layer interference between the DMRS ports caused by the excessively large quantity of transmission layers between the terminal device and the network device is avoided.

The orthogonal cover code OCC of the first DMRS is the same as a result obtained after cyclic shift is performed on the OCC corresponding to the first time-frequency resource in the OCC of the second DMRS.

The OCC of the first DMRS is orthogonal to the OCC corresponding to the first time-frequency resource in the OCC of the second DMRS.

A quantity of subcarriers included in the second time-frequency resource is P times a quantity of subcarriers included in the first time-frequency resource, and P is an integer greater than 1; and on an orthogonal frequency division multiplexing OFDM symbol in time domain, the first time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

Because the first time-frequency resource includes a subcarrier set in which subcarriers are distributed at equal intervals in the subcarriers included in the second time-frequency resource, it is convenient to determine the OCC of the first DMRS that meets a condition (that is, is orthogonal to the OCC corresponding to the second DMRS in the first time-frequency resource).

In an implementation, P=2; and the OCC of the first DMRS and the OCC corresponding to the first time-frequency resource in the OCC of the second DMRS meet the following Formula 1:

$$s_1(m) = s_2(m) \cdot e^{j\frac{2\pi m \omega_1}{3M}}$$

Formula 1

$s_1(m)$ represents an $m^{th}$ term in the OCC of the first DMRS, and $s_2(m)$ represents an $m^{th}$ term in the OCC corresponding to the first time-frequency resource in the OCC of the second DMRS; M represents a quantity of RBs corresponding to the second DMRS that are in resource blocks RBs carrying the second time-frequency resource and that are used for determining the OCC of the first DMRS through cyclic shift, and M is a multiple of 2; and $\omega_1$ represents a phase shift factor of the first DMRS.

In the foregoing implementation, the OCC of the first DMRS may be determined by using the Formula 1, so that the OCC of the first DMRS is conveniently and quickly determined.

In an implementation, the method further includes: the receiving device receives a third DMRS from a third DMRS port by using the first time-frequency resource. An OCC of the third DMRS and the OCC corresponding to the first time-frequency resource in the OCC of the second DMRS meet the following Formula 2:

$$s_3(m) = s_2(m) \cdot e^{j\frac{2\pi m \omega_2}{3M}}$$

Formula 2

$s_3(m)$ represents an $m^{th}$ term in the OCC of the third DMRS, and $s_2(m)$ represents the $m^{th}$ term in the OCC corresponding to the first time-frequency resource in the OCC of the second DMRS; M represents the quantity of RBs corresponding to the second DMRS that are in the RBs carrying the second time-frequency resource and that are used for determining the OCC of the first DMRS through the cyclic shift, and M is the multiple of 2; and $\omega_2$ represents a phase shift factor of the third DMRS, and $\omega_2$ is different from $\omega_1$.

In the foregoing implementation, it is considered that when cyclic shift is performed on an OCC of a DMRS (that is, the second DMRS) of a specific DMRS port (that is, the second DMRS port), to obtain an OCC of a DMRS (that is, the first DMRS) of another DMRS port (that is, the first DMRS port), a plurality of different OCCs may be obtained by using different phase shift factors $\omega$. OCCs of DMRSs corresponding to the plurality of different OCCs may all be orthogonal to an OCC of a DMRS of an original specific DMRS port. Therefore, in the foregoing implementation, a third DMRS that does not cause interference to the first DMRS port and the second DMRS port may be transmitted on the first time-frequency resource multiplexed by the first DMRS port and the second DMRS port. In this way, a quantity of orthogonal DMRS ports supported by the system is further increased without increasing overheads of the time-frequency resource allocated to the DMRS.

In an implementation, the method further includes: the receiving device receives a fourth DMRS from a fourth DMRS port by using a third time-frequency resource; the third time-frequency resource is included in the second time-frequency resource, and the third time-frequency resource does not overlap the first time-frequency resource; and an orthogonal cover code OCC of the fourth DMRS is orthogonal to an OCC corresponding to the third time-frequency resource in the OCC of the second DMRS.

In the foregoing implementation, a part of time-frequency resources (that is, the third time-frequency resource) in the second time-frequency resource of the second DMRS port other than the first time-frequency resource may be multiplexed from the fourth DMRS port, thereby further increasing a quantity of orthogonal DMRS ports supported by the system.

In an implementation, a quantity of subcarriers included in the second time-frequency resource is P times a quantity of subcarriers included in the third time-frequency resource, and P is an integer greater than 1; and on an OFDM symbol in time domain, the third time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

In the foregoing implementation, because the third time-frequency resource includes a subcarrier set in which subcarriers are distributed at equal intervals in the subcarriers included in the second time-frequency resource, it is convenient to determine the OCC of the fourth DMRS that meets a condition (that is, is orthogonal to the OCC corresponding to the second DMRS in the third time-frequency resource).

In an implementation, the method further includes: the receiving device sends first indication information, where the first indication information indicates, to a sending device, at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; the sending device is a device that sends the first DMRS from the first DMRS port by using the first time-frequency resource.

In the foregoing implementation, the sending device may determine the phase shift factor of the first DMRS or the location of the first time-frequency resource in the second time-frequency resource based on the first indication information, to send the first DMRS from the first DMRS port by using the first time-frequency resource. It may also be understood that in the foregoing implementation, the first DMRS port may be configured for the sending device in a manner of sending the first indication information by the receiving device.

In an implementation, the method further includes: the receiving device receives second indication information from the sending device, where the second indication information indicates the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the sending device is a device that sends the first DMRS from the first DMRS port by using the first time-frequency resource.

In the foregoing implementation, the receiving device may determine the phase shift factor of the first DMRS or the location of the first time-frequency resource in the second time-frequency resource based on the first indication information, to receive the first DMRS from the first DMRS port by using the first time-frequency resource. In other words, the receiving device may learn that the sending device is ready to send the first DMRS from the first DMRS port by using the first time-frequency resource in a manner in which the receiving device receives the first indication information.

According to a second aspect, a communication method is provided. The method includes: a sending device sends a first DMRS from a first demodulation reference signal DMRS port by using a first time-frequency resource, where the first time-frequency resource is included in a second time-frequency resource, the second time-frequency resource is a time-frequency resource used for mapping a second DMRS of a second DMRS port, and an orthogonal cover code OCC of the first DMRS is orthogonal to an OCC corresponding to the first time-frequency resource in an OCC of the second DMRS.

The orthogonal cover code OCC of the first DMRS is the same as a result obtained after cyclic shift is performed on the OCC corresponding to the first time-frequency resource in the OCC of the second DMRS.

A quantity of subcarriers included in the second time-frequency resource is P times a quantity of subcarriers included in the first time-frequency resource, and P is an integer greater than 1; and on an orthogonal frequency division multiplexing OFDM symbol in time domain, the first time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

In an implementation, P=2; and the OCC of the first DMRS and the OCC corresponding to the first time-frequency resource in the OCC of the second DMRS meet the following Formula 1:

$$s_1(m) = s_2(m) \cdot e^{j\frac{2\pi m \omega_1}{3M}}$$

Formula 1

$s_1(m)$ represents an $m^{th}$ term in the OCC of the first DMRS, and $s_2(m)$ represents an $m^{th}$ term in the OCC corresponding to the first time-frequency resource in the OCC of the second DMRS; M represents a quantity of RBs corresponding to the second DMRS that are in resource blocks RBs carrying the second time-frequency resource and that are used for determining the OCC of the first DMRS through cyclic shift, and M is a multiple of 2; and $\omega_1$ represents a phase shift factor of the first DMRS.

In an implementation, the method further includes: the sending device sends a third DMRS from a third DMRS port by using the first time-frequency resource, where an OCC of the third DMRS and the OCC corresponding to the first time-frequency resource in the OCC of the second DMRS meet the following Formula 2:

$$s_3(m) = s_2(m) \cdot e^{j\frac{2\pi m \omega_2}{3M}}$$

Formula 2

$s_3(m)$ represents an $m^{th}$ term in the OCC of the third DMRS, and $s_2(m)$ represents the $m^{th}$ term in the OCC corresponding to the first time-frequency resource in the OCC of the second DMRS; M represents the quantity of RBs corresponding to the second DMRS that are in the resource blocks RBs carrying the second time-frequency resource and that are used for determining the OCC of the first DMRS through the cyclic shift, and M is the multiple of 2; and $\omega_2$ represents a phase shift factor of the third DMRS, and $\omega_1$ is different from $\omega_2$.

In an implementation, the method further includes: the sending device sends a third DMRS from a third DMRS port by using a third time-frequency resource, where the third time-frequency resource is included in the second time-frequency resource, and the third time-frequency resource does not overlap the first time-frequency resource; and the orthogonal cover code OCC of the third DMRS is orthogonal to an OCC corresponding to the third time-frequency resource in the OCC of the second DMRS.

In an implementation, a quantity of subcarriers included in the second time-frequency resource is P times a quantity of subcarriers included in the third time-frequency resource, and P is an integer greater than 1; and on an OFDM symbol in time domain, the third time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

In an implementation, the method further includes: the sending device receives first indication information, where the first indication information indicates at least one of the phase shift factor of the first DMRS or a location of the first time-frequency resource in the second time-frequency resource; and the phase shift factor of the first DMRS is used for representing a phase difference between the OCC of the first DMRS and the OCC corresponding to the first time-frequency resource in the OCC of the second DMRS.

In an implementation, the method further includes: the sending device sends second indication information, where the second indication information indicates, to a receiving device, at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the receiving device is a device that receives the first DMRS from the first DMRS port by using the first time-frequency resource.

According to a third aspect, a receiving device is provided, configured to perform the method according to the first aspect.

According to a fourth aspect, a sending device is provided, configured to perform the method according to the second aspect.

According to a fifth aspect, a computer-readable storage medium is provided, storing instructions, where when the instructions are run, the communication method provided in the first aspect is performed, or the communication method provided in the second aspect is performed.

According to a sixth aspect, a computer program product is provided, including instructions, where when the instructions are run on a computer, the computer is enabled to perform the communication method provided in the first aspect, or perform the communication method provided in the second aspect.

According to a seventh aspect, a communication system is provided, including a receiving device and a sending device, where the receiving device is configured to perform the communication method provided in the first aspect, and the sending device is configured to perform the communication method provided in the second aspect.

For technical effects brought by any technical solution in the second aspect to the seventh aspect, refer to technical effects brought by the technical solution provided in the first aspect. Details are not repeated.

BRIEF DESCRIPTION OF DRAWINGS

FIG. 1 is a schematic diagram 1 of a pilot pattern according to a conventional technology;
FIG. 2 is a schematic diagram 2 of a pilot pattern according to a conventional technology;
FIG. 3 is a schematic diagram 3 of a pilot pattern according to a conventional technology;
FIG. 4 is a schematic diagram 1 of a network architecture;
FIG. 5 is a schematic diagram 2 of a network architecture;
FIG. 6 is a schematic flowchart 1 of a communication method;
FIG. 7 is a schematic diagram of a pilot pattern according to an embodiment of this application;
FIG. 8 is a schematic flowchart 2 of a communication method according to an embodiment of this application;

FIG. 9 is a schematic flowchart 3 of a communication method according to an embodiment of this application;

FIG. 10 is a schematic flowchart 4 of a communication method according to an embodiment of this application;

FIG. 11 is a schematic flowchart 5 of a communication method according to an embodiment of this application;

FIG. 12 is a schematic diagram 1 of a structure of a communication apparatus;

FIG. 13 is a schematic diagram 2 of a structure of a communication apparatus;

FIG. 14 is a schematic diagram 3 of a structure of a communication apparatus.

## DESCRIPTION OF EMBODIMENTS

The following describes technical solutions in embodiments of this application with reference to the accompanying drawings in embodiments of this application. To clearly describe the technical solutions in embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of "example" or "for example" is intended to present a relative concept in a specific manner for ease of understanding.

A system architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

The following describes related technologies in embodiments of this application.

1. Resource block (resource BLOCK, RB)

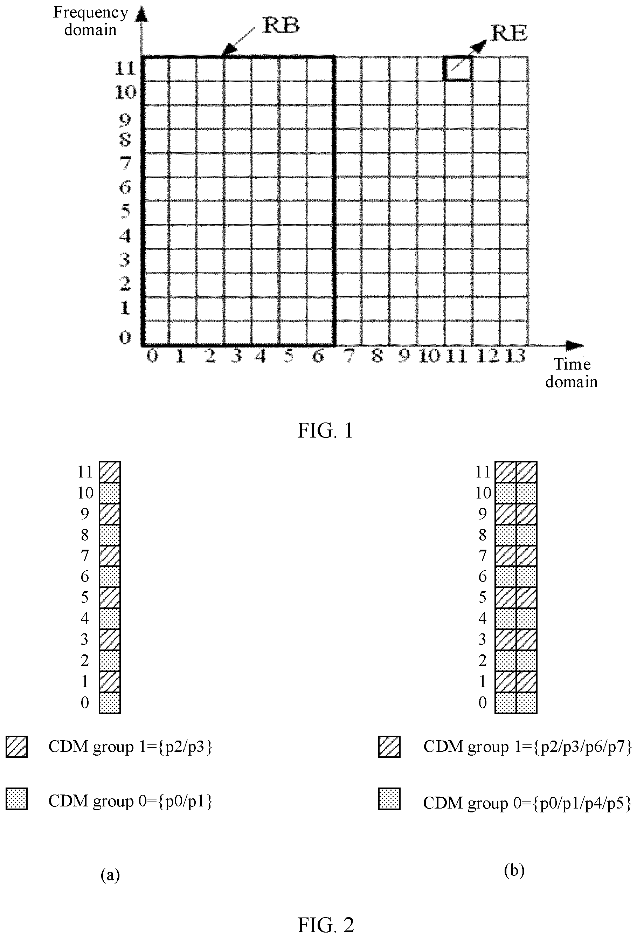

In a radio resource, a minimum resource granularity in time domain may be an orthogonal frequency division multiplexing (Orthogonal Frequency Division Multiplexing, OFDM) symbol (symbol), which may be referred to as a symbol (symbol) for short. In frequency domain, a minimum resource granularity may be a subcarrier. One OFDM symbol and one subcarrier form one resource element (resource element, RE). Resource mapping is performed at a physical layer on an RE basis. In some communication protocols, for example, in a long term evolution (long term evolution, LTE) standard protocol, all OFDM symbols in one slot (slot) and twelve subcarriers in frequency domain form one RB, as shown in FIG. 1. A quantity of OFDM symbols in one slot may be six, or may be seven. In some other communication protocols, for example, in a new radio (New radio, NR) standard protocol, one RB includes one OFDM symbol and twelve subcarriers.

2. Demodulation reference signal (demodulation reference signal, DMRS) port

In a mobile communication network, a sending device (for example, a terminal device) may send a radio signal to a receiving device (for example, a base station) by using one or more antenna ports. As a logical concept, the antenna port may correspond to one physical transmit antenna, or may correspond to a plurality of physical transmit antennas. In the two cases, a receiver (receiver) of the receiving device does not decompose signals from a same antenna port. From a perspective of the receiving device, regardless of whether a channel is formed by a single physical transmit antenna or formed by combining the plurality of physical transmit antennas, a reference signal (reference signal) corresponding to the antenna port defines the antenna port. An antenna port corresponding to a DMRS may be referred to as a DMRS port, and the receiving device may obtain channel information of the antenna port through estimation based on the DMRS. When the receiving device is the base station, the base station may perform data demodulation on a physical uplink shared channel (physical uplink shared channel, PUSCH) based on a channel estimation result. When the receiving device is the terminal device, the terminal device performs data demodulation on a physical downlink shared channel (physical downlink shared channel, PDSCH) based on the channel estimation result.

Currently, in a mobile communication network, DMRSs of a plurality of layers of DMRS ports may be orthogonal, to simultaneously send information to the receiving device by using the plurality of layers of DMRS ports. Specifically, when uplink DMRS channel estimation is performed, a maximum quantity of DMRS ports whose DMRSs are orthogonal supported by a system is related to a currently used waveform and a DMRS configuration type.

For example, in a new radio access technology (new radio access technology, NR) system, uplink communication may support two waveforms: a cyclic prefix-orthogonal frequency division multiplexing (cyclic prefix-orthogonal frequency division multiplexing, CP-OFDM) waveform, or a discrete fourier transform-spread-orthogonal frequency division multiplexing (discrete fourier transform-spread-orthogonal frequency division multiplexing, DFT-S-OFDM) waveform. Which waveform is specifically used for the uplink communication may be determined by using a higher layer signaling configuration.

Different waveforms used in the uplink communication result in different generation manners of a DMRS sequence. For example, in an NR system, a ZC sequence is used for a DMRS corresponding to a DFT-S-OFDM waveform, and a gold sequence is used for a DMRS corresponding to a CP-OFDM waveform. For the CP-OFDM waveform, two DMRS configurations may be supported: a configuration type 1 (configuration type 1) and a configuration type 2 (configuration type 2). In the configuration type 1 (configuration type 1), the system supports DMRSs of eight ports to be orthogonal, that is, supports a maximum of eight layers of orthogonal DMRS ports to be multiplexed. In the configuration type 2 (configuration type 2), the system supports DMRSs of twelve ports to be orthogonal, that is, supports a maximum of twelve layers of orthogonal DMRS ports to be multiplexed.

In addition, DMRSs may be classified into a front-loaded DMRS (front-loaded DMRS) and an additional DMRS (additional DMRS) based on different locations of the DMRS time domain. The front-loaded DMRS is placed on the first several symbols in one slot, and a maximum of two symbols may be configured.

In a case of a plurality of layers of orthogonal DMRS ports are multiplexed, in frequency domain, different DMRS ports are divided into different code division multiplexing (code division multiplexing, CDM) groups (group). DMRS ports in a same CDM group are expanded in the time domain and frequency domain by using an orthogonal cover code (orthogonal cover code, OCC), and orthogonality of different DMRS ports may be ensured, thereby improving accuracy of channel estimation.

For example, FIG. 2 is a schematic diagram of a pilot pattern of a DMRS using a configuration type 1. When one symbol is configured for the DMRS, REs of two patterns in (a) in FIG. 2 respectively represent REs occupied by a CDM group 0 and a CDM group 1, and p0, p1, p2, and p3 respectively represent DMRS port indexes. In a same CDM group, a frequency domain OCC is used in frequency domain to ensure that DMRS sequences of two DMRS ports in the same CDM group are orthogonal. It may be learned that when the configuration type 1 is used and one symbol is configured for the DMRS, the system supports a maximum of four layers of orthogonal DMRS ports to be multiplexed.

When two symbols are configured for the DMRS, REs of two patterns in (b) in FIG. 2 respectively represent REs occupied by the CDM group 0 and the CDM group 1, and p0, p1, ..., p6, and p7 respectively represent DMRS port indexes. In the same CDM group, it is ensured that DMRS sequences of four DMRS ports in the same CDM group are orthogonal by using a frequency domain OCC (a code length is 2) and a time domain OCC (a code length is 2). It may be learned that when the configuration type 1 is used and two symbols are configured for the DMRS, the system supports a maximum of eight layers of orthogonal DMRS ports to be multiplexed.

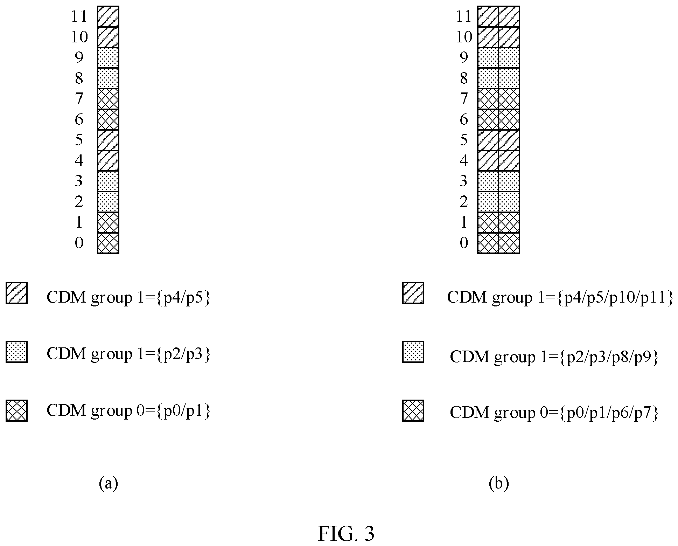

For another example, FIG. 3 is a schematic diagram of a pilot pattern of a DMRS using a configuration type 2. When one symbol is configured for the DMRS, REs of three patterns in (a) in FIG. 3 respectively represent REs occupied by the CDM group 0, the CDM group 1, and the CDM group 2, and p0, p1, ..., p4, and p5 respectively represent DMRS port indexes. In a same CDM group, a frequency domain OCC is used in frequency domain to ensure that DMRS sequences of two DMRS ports in the same CDM group are orthogonal. It may be learned that when the configuration type 2 is used and one symbol is configured for the DMRS, the system supports a maximum of six layers of orthogonal DMRS ports to be multiplexed.

When two symbols are configured for the DMRS, REs of three patterns in (b) in FIG. 3 respectively represent REs occupied by the CDM group 0, the CDM group 1, and the CDM group 2, and p0, p1, ..., p10, and p11 respectively represent DMRS port indexes. In a same CDM group, frequency domain OCC is used in frequency domain to ensure that DMRS sequences of four DMRS ports in the same CDM group are orthogonal. It may be learned that when the configuration type 2 is used and two symbols are configured for the DMRS, the system supports a maximum of twelve layers of orthogonal DMRS ports to be multiplexed.

The following describes technical solutions provided in embodiments of this application with reference to examples. The technical solutions provided in embodiments of this application may be applied to various communication systems, for example, a communication system using an NR technology, a long term evolution (long term evolution, LTE) technology, or another radio access technology.

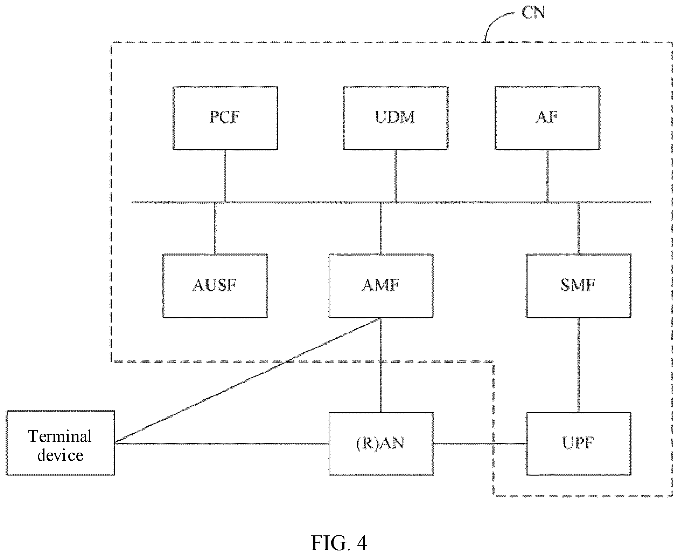

For example, FIG. 4 is a schematic diagram of a network architecture to which technical solutions provided in embodiments of this application are applied. The network may include: a terminal device, a radio access network (radio access network, RAN), or an access network (access network, AN) (the RAN and the AN are collectively referred to as an (R)AN), and a core network (core network, CN).

The terminal device may be a device having a radio transceiver function. The terminal device may have different names, for example, user equipment (user equipment, UE), an access device, a terminal unit, a terminal station, a mobile station, a mobile console, a remote station, a remote terminal, a mobile device, a wireless communication device, a terminal agent, or a terminal apparatus. The terminal device may be deployed on land, including an indoor or outdoor device, a handheld device, or a vehicle-mounted device; or may be deployed on a water surface (for example, on a ship); or may be deployed in air (for example, on an aircraft, a balloon, or a satellite). The terminal device includes a handheld device, a vehicle-mounted device, a wearable device, or a computing device that has a wireless communication function. For example, the terminal device may be a mobile phone (mobile phone), a tablet computer, or a computer with a wireless transceiver function. Alternatively, the terminal device may be a virtual reality (virtual reality, VR) device, an augmented reality (augmented reality, AR) device, a wireless terminal in an industrial control terminal, a wireless terminal in unmanned driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus that may support the terminal device in implementing the function, for example, a chip system. In this application, the chip system may include a chip, or may include a chip and another discrete component.

The (R)AN mainly includes an access network device. The access network device may also be referred to as a base station. The base station may include base stations in various forms. For example, a macro base station, a micro base station (also referred to as a small station), a relay station, or an access point. Specifically, the base station may be an access point (access point, AP) in a wireless local area network (Wireless Local Area Network, WLAN), a base transceiver station (Base Transceiver Station, BTS) in a global system for mobile communications (Global System for Mobile Communications, GSM) or code division multiple access (Code Division Multiple Access, CDMA), a NodeB (NodeB, NB) in wideband code division multiple access (Wideband Code Division Multiple Access, WCDMA), an evolved NodeB (Evolved NodeB, eNB or eNodeB), a relay station, an access point, a vehicle-mounted device, or a wearable device in LTE, a next generation NodeB (The Next Generation NodeB, gNB) in a 5G network, a base station in a future evolved public land mobile network (Public Land Mobile Network, PLMN), or the like.

The base station usually includes a baseband unit (baseband unit, BBU), a remote radio unit (remote radio unit, RRU), an antenna, and a feeder used to connect the RRU and the antenna. The BBU is configured to be responsible for signal modulation. The RRU is configured to be responsible for radio frequency processing. The antenna is configured to be responsible for conversion between a pilot wave on a cable and a space wave in the air. A distributed base station greatly shortens a length of the feeder between the RRU and the antenna, to reduce a signal loss, and reduce costs of the feeder. In addition, the RRU and the antenna are relatively small and can be installed anywhere, making network planning more flexible. The RRU may be remotely placed. In addition, all BBUs may be centralized and placed in a central office (central office, CO). In this centralized manner, a quantity of base station equipment rooms can be greatly reduced, energy consumption of auxiliary devices, especially air conditioners, can be reduced, and carbon emissions can be greatly reduced. In addition, after distributed BBUs are integrated into a BBU baseband pool, the BBUs can be managed and scheduled centrally, and resources can be allocated more flexibly. In this mode, all physical base stations evolve into virtual base stations. All the virtual base stations share information such as data sent and received by users and channel quality in the BBU baseband pool, and cooperate with each other, to implement joint scheduling. In some deployments, the base station may include a central unit (central unit, CU) and a distributed unit (distributed unit, DU). The base station may further include an active antenna unit (active antenna unit, AAU). The CU implements some functions of the base station, and the DU implements some functions of the base station. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC for short) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in this architecture, higher layer signaling, for example, RRC layer signaling or PDCP layer signaling, may also be considered as being sent by the DU or sent by the DU and the AAU. It may be understood that in embodiments of this application, the access network device may be a device including one or more of the CU node, the DU node, and the AAU node. In addition, the CU may be classified as a network device in a RAN, or the CU may be classified as a network device in a core network (core network, CN). This is not limited herein.

The core network includes a plurality of network elements of the core network (or referred to as network function network elements). For example, in FIG. 4, in a 5th generation mobile communication technology (5th-Generation, 5G) system, the core network includes: an access and mobility management function (access and mobility management services, AMF) network element, a session management function (session management function, SMF) network element, a PCF network element, a user plane function (user plane function, UPF) network element, an application layer function (application function, AF) network element, an AUSF network element, and a UDM network element.

In addition, the core network may further include some network elements not shown in FIG. 4, for example, a security anchor function (security anchor function, SEAF) network element and an authentication credential repository and processing function (authentication credential repository and processing function, ARPF) network element. Details are not repeated in embodiments of this application.

In addition, in a wireless communication network, communication may be classified into different types based on different types of sending nodes and receiving nodes. For example, information sent by the network device to the terminal device is referred to as downlink (downlink, DL) communication, and information sent by the terminal device to the network device is referred to as uplink (uplink, UL) communication. The network device may be specifically a network element that is in the base station or the core network and that may exchange information with the terminal device.

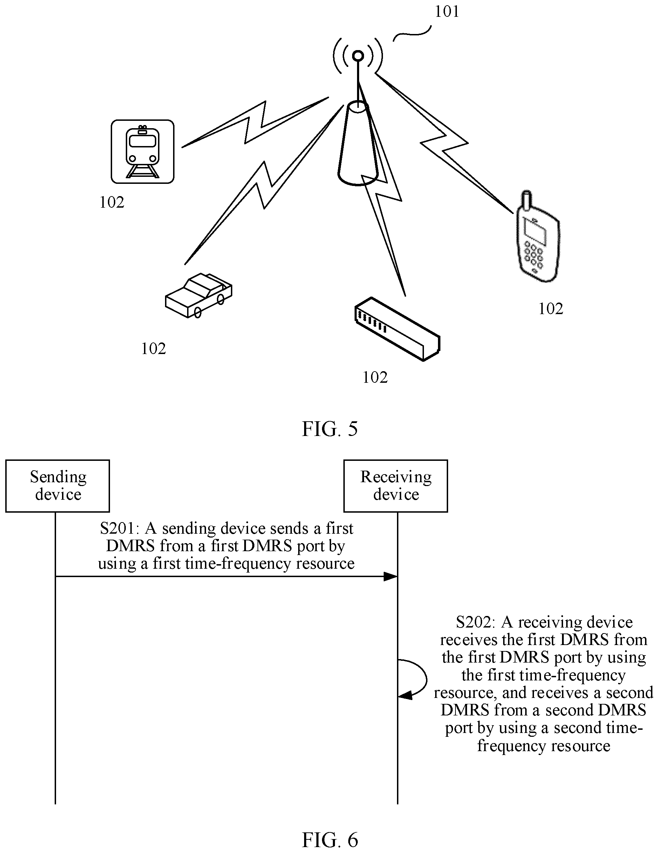

FIG. 5 is a schematic diagram of a communication system according to an embodiment of this application. The communication system may include a network device 101 and one or more terminal devices 102 connected to the network device 101. The network device 101 may be specifically an access network device. For example, the network device 101 may be a device in the (R)AN in FIG. 4. The one or more terminal devices 102 may be the terminal device in FIG. 4.

In the communication system shown in FIG. 5, when the one or more terminal devices 102 send uplink information to the network device 101, or the network device 101 sends downlink information to the one or more terminal devices 102, and when a quantity of paired transmission layers in a network exceeds a maximum quantity of multiplexing layers of an orthogonal DMRS port supported by the system, for example, in the uplink communication, when a quantity of paired transmission layers in the configuration type 1 exceeds eight or when a quantity of paired transmission layers in the configuration type 2 exceeds twelve, orthogonality of all DMRS ports cannot be ensured, as a result, inter-layer interference is introduced between DMRS ports, and DMRS channel estimation performance deteriorates.

To resolve the foregoing technical problem, this application provides a communication method. As shown in FIG. 6, the method includes the following steps.

S201: A sending device sends a first DMRS from a first DMRS port by using a first time-frequency resource.

When the communication method is applied to the uplink communication, the sending device may be the terminal device 102 in FIG. 5. When the communication method is applied to the downlink communication, the sending device may be the network device 101 in FIG. 5.

The first time-frequency resource is a part of time-frequency resources in the second time-frequency resource. The second time-frequency resource is a time-frequency resource used for mapping the second DMRS of the second DMRS port. That the first time-frequency resource is a part of time-frequency resources in the second time-frequency resource may be understood as that the first time-frequency resource is included in the second time-frequency resource and the first time-frequency resource does not completely overlap the second time-frequency resource. That is, at least a part of time-frequency resources in the second time-frequency resource is not included in the first time-frequency resource.

In other words, the system supports multiplexing of a part of time-frequency resources in the second DMRS port by the first DMRS port. The sending device may send the first DMRS from the first DMRS port by using the first time-frequency resource. In addition, the sending device or another device other than the sending device may send the second DMRS from the second DMRS port by using the second time-frequency resource. This is equivalent to that the first DMRS port and the second DMRS port multiplex the first time-frequency resource, to send respective DMRSs, further, the receiving device obtains the second DMRS by parsing the second time-frequency resource, and obtains the first DMRS by parsing the first time-frequency resource in the second time-frequency resource.

For example, if the second DMRS port is a port configured by using the configuration type 1, and one symbol is configured for the DMRS, the second time-frequency resource occupied by the second DMRS being sent by the second DMRS port may be represented as an RE occupied by the CDM group 0 or the CDM group 1 in (a) in FIG. 2. An example in which the second DMRS port is a p0 port is used, and the second time-frequency resource includes REs whose indexes are 0, 2, 4, 6, 8, and 10 in (a) in FIG. 2. When the second time-frequency resource includes the REs whose indexes are 0, 2, 4, 6, 8, and 10 in (a) in FIG. 2, the first time-frequency resource may include a part of REs in the REs whose indexes are 0, 2, 4, 6, 8, and 10. That is, when the sending device or another device sends the second DMRS from the second DMRS port by using the REs whose indexes are 0, 2, 4, 6, 8, and 10 in (a) in FIG. 2, the sending device may send the first DMRS from the first DMRS port by using the part of REs. That is, in this case, the part of REs are multiplexed by the first DMRS port and the second DMRS port.

In an implementation, in the method, a quantity of subcarriers included in the second time-frequency resource is P times a quantity of subcarriers included in the first time-frequency resource, and P is an integer greater than 1. On an OFDM symbol in time domain, the first time-frequency resource includes: a subcarrier set in which subcarriers are distributed at equal intervals in the subcarriers included in the second time-frequency resource. The two adjacent subcarriers in the subcarrier set are spaced by the P-1 subcarriers included in the second time-frequency resource.

Continuing with the foregoing example, when the second time-frequency resource includes the REs whose indexes are 0, 2, 4, 6, 8, and 10 in (a) in FIG. 2, the first time-frequency resource may include REs whose indexes are 2, 6, and 10. In this case, the REs whose indexes are 2, 6, and 10 are multiplexed by the first DMRS port and the second DMRS port.

In addition, using two RBs (that is, twenty-four consecutive subcarriers in frequency domain) as an example, the second time-frequency resource may include REs whose indexes are 0, 2, 4, 6, 8, and 10 in the two RBs. In other words, the second time-frequency resource includes twelve REs in total. The first time-frequency resource may include REs whose indexes are 2, 6, and 10 in the two RBs. In other words, the first time-frequency resource includes six REs in total.

In addition, in the foregoing method, the orthogonal cover code (orthogonal cover code, OCC) of the first DMRS is orthogonal to an OCC corresponding to the first time-frequency resource in the OCC of the second DMRS. In other words, a vector inner product between the OCC of the first DMRS and the OCC corresponding to the first time-frequency resource in the OCC of the second DMRS is 0.

For example, when one symbol is configured for the DMRS, if the second DMRS occupies the REs whose indexes are 0, 2, 4, 6, 8, and 10, and the first DMRS occupies the REs whose indexes are 2, 6, and 10, a vector inner product between the OCC of the OCC of the second DMRS on the REs whose indexes are 2, 6, and 10 and the OCC of the first DMRS on the REs whose indexes are 2, 6, and 10 is 0.

For another example, using two REs (that is, twenty-four consecutive subcarriers in frequency domain) as an example, when one symbol is configured for the DMRS, the second time-frequency resource may include the REs whose indexes are 0, 2, 4, 6, 8, and 10 in the two REs. In other words, the second time-frequency resource includes twelve REs in total. The first time-frequency resource may include the REs whose indexes are 2, 6, and 10 in the two REs. In other words, the first time-frequency resource includes six REs in total. In this case, a vector inner product between the OCC of the OCC of the second DMRS on the six REs whose indexes are 2, 6, and 10 and the OCC of the first DMRS on the six REs whose indexes are 2, 6, and 10 is 0.

The OCC of the first DMRS is orthogonal to the OCC corresponding to the first time-frequency resource in the OCC of the second DMRS, so that the inter-layer interference between the first DMRS port and the second DMRS port may be avoided.

In an implementation, in the foregoing method, the OCC of the first DMRS is the same as a result obtained after cyclic shift is performed on the OCC corresponding to the first time-frequency resource in the OCC of the second DMRS.

For a sequence, a cyclic shift result of the sequence is orthogonal to the sequence. Therefore, in the foregoing implementation, the OCC of the first DMRS may be orthogonal to the OCC corresponding to the first time-frequency resource in the OCC of the second DMRS.

Continuing with the foregoing example, if the second DMRS occupies the REs whose indexes are 0, 2, 4, 6, 8, and 10, and the first DMRS occupies the REs whose indexes are 2, 6, and 10, the OCC of the first DMRS may be obtained by performing cyclic shift on the OCC of the second DMRS on the REs whose indexes are 2, 6, and 10. In this way, the obtained OCC of the first DMRS is orthogonal to the OCC of the OCC of the second DMRS on the REs whose indexes are 2, 6, and 10.

It should be noted that in some other implementations, another manner other than the cyclic shift may be used, so that the OCC of the first DMRS is orthogonal to the OCC corresponding to the first time-frequency resource in the OCC of the second DMRS. This may not be limited in this application.

S202: The receiving device receives the first DMRS from the first DMRS port by using the first time-frequency resource, and receives the second DMRS from the second DMRS port by using the second time-frequency resource.

For example, when the communication method is applied to the uplink communication, the receiving device may be the network device 101 in FIG. 5. When the communication method is applied to the downlink communication, the receiving device may be the terminal device 102 in FIG. 5.

The second DMRS may be sent on the second time-frequency resource from the second DMRS port by the sending device. In addition, the second DMRS may also be sent on the second time-frequency resource from the second DMRS port by another device other than the sending device. This may not be limited in this application.

In the foregoing method in this application, first, because the first time-frequency resource occupied by the first DMRS transmitted from the first DMRS port is a part of time-frequency resources in the second time-frequency resource, additional overheads of the time-frequency resource do not need to be separately allocated to the first DMRS port. In addition, because the OCC of the first DMRS is orthogonal to the OCC corresponding to the first time-frequency resource in the OCC of the second DMRS, interference between the first DMRS port and the second DMRS port may be avoided. Further, when the second DMRS port is one of a maximum of eight orthogonal DMRS ports supported by a system in a configuration type 1 in the conventional technology or one of a maximum of twelve orthogonal DMRS ports supported by a system in a configuration type 2, because in this application, the OCC of the first DMRS transmitted from the first DMRS port may be orthogonal to the OCC corresponding to the second DMRS, no interference is caused to information transmission on the second DMRS port, so that an effect of adding a new orthogonal DMRS port based on the maximum of eight orthogonal DMRS ports supported by the system in the configuration type 1 or the maximum of twelve orthogonal DMRS ports supported by the system in the configuration type 2 in the conventional technology may be achieved. Therefore, the inter-layer interference between the DMRS ports caused by the excessively large quantity of transmission layers between the terminal device and the network device is avoided.

The following describes a specific implementation process of the foregoing method in this application with reference to an example.

For ease of understanding, in the following example, an example in which the sending device sends the first DMRS from the first DMRS port by using the first time-frequency resource and the sending device further sends the second DMRS from the second DMRS port by using the second time-frequency resource is used for description. It may be understood that in a specific implementation, another device other than the sending device may send the second DMRS from the second DMRS port by using the second time-frequency resource. For example, the sending device may be a terminal device (referred to as a terminal device 1). The terminal device 1 sends the first DMRS from the first DMRS port by using the first time-frequency resource. In addition, the terminal device 2 sends the second DMRS from the second DMRS port by using the second time-frequency resource. In other words, in a specific implementation, when the sending device sends the first DMRS from the first DMRS port by using the first time-frequency resource, whether there is a device that sends the second DMRS from the second DMRS port by using the second time-frequency resource, and whether the device that sends the second DMRS from the second DMRS port by using the second time-frequency resource is the sending device or another device may not be limited in this application.

Step 1. The sending device sends the second DMRS from the second DMRS port by using the second time-frequency resource.

Specifically, it is assumed that a CP-OFDM waveform is used for the uplink communication, and a DMRS sequence is generated by using a gold sequence. In this case, the DMRS sequence $r(n)$ meets the following Formula (1):

$$r(n) = \frac{1}{\sqrt{2}}\left(1 - 2 \cdot c(2n)\right) + j\frac{1}{\sqrt{2}}\left(1 - 2 \cdot c(2n+1)\right)$$

Formula (1)

$c(i)$ is a pseudo-random sequence, for example, a gold sequence. A generation formula of $c(i)$ is:

$$c(n) = \left(x_1(n + N_C) + x_2(n + N_C)\right) \bmod 2$$
$$x_1(n + 31) = \left(x_1(n + 3) + x_1(n)\right) \bmod 2$$
$$x_2(n + 31) = \left(x_2(n + 3) + x_2(n + 2) + x_2(n + 1) + x_2(n)\right) \bmod 2$$

Formula (2)

$N_C$=1600, and $x_1(n)$ may be initialized to $x_1(0) = 1, x_1(n)=0, n=1,2,...,30$, and $x_2(n)$ meets $c_{\text{init}} = \sum_{i=0}^{30} x_2(i) \cdot 2^i$. A DMRS sequence corresponding to a PUSCH is generated, and $C_{\text{init}}$ meets:

$$c_{\text{init}} = \left(2^{17}\left(N_{\text{symb}}^{\text{slot}} n_{\text{s,f}}^{\mu} + l + 1\right)\left(2N_{\text{ID}}^{\overline{n}_{\text{SCID}}^{-\overline{\lambda}}} + 1\right) + 2^{17}\left\lfloor\frac{\overline{\lambda}}{2}\right\rfloor + 2N_{\text{ID}}^{\overline{n}_{\text{SCID}}^{-\overline{\lambda}}} + \overline{n}_{\text{SCID}}^{-\overline{\lambda}}\right) \bmod 2^{31}$$

Formula (3)

$l$ is an OFDM symbol index, $n_{\text{s,f}}^{\mu}$ is a quantity of slots in one frame, and $N_{\text{symb}}^{\text{slot}}$ is a quantity of symbols in one slot. $\lambda$ is a CDM group index. Depending on a protocol used, $\overline{n}_{\text{SCID}}^{-\overline{\lambda}}$ and $\overline{\lambda}$ meet:

$$\overline{n}_{\text{SCID}}^{-\overline{\lambda}} = \begin{cases} n_{\text{SCID}} & \lambda=0 \text{ or } \lambda=2 \\ 1\text{-}n_{\text{SCID}} & \lambda=1 \end{cases}$$

$$\overline{\lambda} = \lambda$$

or, $\overline{n}_{\text{SCID}}^{-\overline{\lambda}}$ and $\overline{\lambda}$ meet:

$$\overline{n}_{\text{SCID}}^{-\overline{\lambda}} = n_{\text{SCID}}$$

$$\overline{\lambda} = 0$$

$n_{\text{SCID}} \in \{0,1\}$ is a DMRS sequence initialization parameter, $N_{\text{ID}}^{\overline{n}_{\text{SCID}}^{\overline{\lambda}}}$ is a cover code, and a value of $N_{\text{ID}}^{\overline{n}_{\text{SCID}}^{\overline{\lambda}}}$ is determined by different higher-layer parameter configurations.

Based on the foregoing sequence $r(n)$, when the second DMRS is mapped to the REs, the foregoing sequence $r(n)$ may be mapped to each RE by using the following Formula (4):

$$\tilde{a}_{k,l}^{(\tilde{p}_j,\mu)} = w_{\mathrm{f}}\left(k'\right)\cdot w_{\mathrm{t}}\left(l'\right)r\left(2n+k'\right)$$

$$k = \begin{cases} 4n+2k'+\Delta & \text{Configuration type 1} \\ 6n+k'+\Delta & \text{Configuration type 2} \end{cases}$$

$$k' = 0,1$$

$$l = \bar{l} + l'$$

$$n = 0,1,\dots$$

$$j = 0,1,\dots,\upsilon-1$$

Formula (4)

$\tilde{a}_{k,l}^{(\tilde{p}_j,\mu)}$

represents an intermediate variable of the DMRS port $\tilde{p}_j$ on the REs whose subcarrier index is $k$ and the OFDM symbol index is $l$. In the Formula (4), when the configuration type 1 is used, $k = 4n+2k'+\Delta$, and when the configuration type 1 is used, $k = 6n +k' + \Delta$. $w_{\mathrm{f}}(k')$ corresponds to a frequency domain OCC of the DMRS, $w_{\mathrm{t}}(l')$ corresponds to a time domain OCC of the DMRS, and further $w_{\mathrm{f}}(k')\cdot w_{\mathrm{t}}(l')$ represents an OCC of the DMRS on a corresponding RE. Values of $w_{\mathrm{f}}(k')$, $w_{\mathrm{t}}(l')$, and $\Delta$ may be determined based on predefined configuration information. For example, refer to descriptions of values of $w_{\mathrm{f}}(k')$, $w_{\mathrm{t}}(l')$, and $\Delta$ in clause, section 6.4.1.1.3 of 3GPP TS 38.211. For example, values of $w_{\mathrm{f}}(k')$, $w_{\mathrm{t}}(l')$. and $\Delta$ in the configuration type 1 may be determined based on Table 1 below:

**Table 1**

| $\tilde{p}$ | CDM group $\lambda$ | $\Delta$ | $w_{\mathrm{f}}(k')$ | | $w_{\mathrm{t}}(l')$ | |
|---|---|---|---|---|---|---|
| | | | $k' = 0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

Table 1 $\tilde{p}$ represents an index of the DMRS port. It may be learned from the Table 1 that OCCs used by four DMRS ports {0, 1, 4, 5} included in the CDM group 0 in the configuration type 1 are values of "$w_{\mathrm{f}}(k')$ and $w_{\mathrm{t}}(l')$ corresponding to rows 0, 1, 4, and 5 in the table. $w_{\mathrm{f}}(k')$ corresponds to the OCC in frequency domain, and a code length is 2; and $w_{\mathrm{t}}(l')$ corresponds to the OCC in the time domain, and a code length is 2. When only one OFDM symbol is configured for the DMRS, it may be understood that frequency domain spreading with an OCC of 2 is performed in one CDM group. When two OFDM symbols are configured for the DMRS, each CDM group occupies two OFDM symbols. It may be understood that frequency domain spreading with an OCC code length of 2 and time domain spreading with an OCC code length of 2 are performed in one CDM group, jointly, which is equivalent to that time-frequency domain spreading with an OCC of 4 is performed.

Based on the foregoing manner, the sending device may map the second DMRS to a corresponding RE, to send the second DMRS from the second DMRS port by using the second time-frequency resource.

Step 2. The sending device sends the first DMRS from the first DMRS port by using the first time-frequency resource.

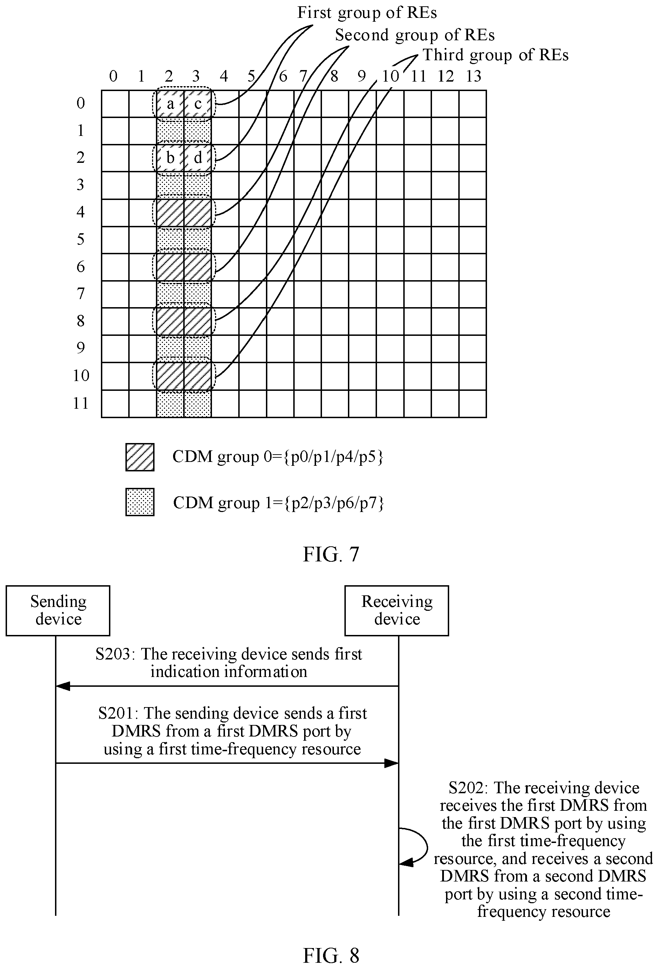

For example, using four ports included in the CDM group 0 in the Table 1 as an example, as shown in FIG. 7, the CDM group 0 corresponds to twelve REs (frequency domain subcarrier index locations are 0, 2, 4, 6, 8, and 10, and time domain OFDM symbol indexes are 2 and 3). In FIG. 7, a vertical axis is a frequency domain location index, and a horizontal axis is a time domain OFDM symbol index. The twelve REs may be divided into three groups, and each group includes four

RES (including two adjacent REs in frequency domain and two adjacent REs in the time domain). As shown in the figure, when two OFDM symbols are configured for the DMRS, subcarrier indexes of a first group of REs are 0 and 2, subcarrier indexes of a second group of REs are 4 and 6, and subcarrier indexes of a third group of REs are 8 and 10. OCCs corresponding to four DMRS ports in each group of REs include four types: {1,1,1,1}, {1,-1,1,-1}, {1,1,-1,-1}, and {1,-1,-1,1}. For example, in the first group of REs in FIG. 7, an OCC of a DMRS port 0 in an RE a, an RE b, an RE c, and an RE d is {1,1,1,1} respectively; an OCC of a DMRS port 1 in the RE a, the RE b, the RE c, and the RE d is {1,-1,1,-1} respectively; an OCC of a DMRS port 4 in the RE a, the RE b, the RE c, and the RE d is {1,1,-1,-1} respectively; and an OCC of a DMRS port 3 in the RE a, the RE b, the RE c, and the RE d is {1,-1,-1,1} respectively, and the same is true for the second group of REs and the third group of REs.

In addition, if only a subcarrier whose time domain OFDM symbol index is 2 is considered, an RE corresponding to the CDM group 0 (using one RB as an example, RE indexes are 0, 2, 4, 6, 8, and 10) is considered. On the REs whose indexes are 0, 2, 4, 6, 8, and 10, an OCC of the DMRS port 0 and an OCC of the DMRS port 4 are {1,1,1,1,1,1}, and an OCC of the DMRS port 1 and an OCC of the DMRS port 5 are {1,-1,1,-1,1,-1}.

Based on the Formula (4) and the description in the Table 1, it is assumed that the DMRS uses the configuration type 1, and the second DMRS port is the DMRS port 0 in the Table 1. In this case, the second DMRS occupies REs whose indexes are 0, 2, 4, 6, 8, and 10 in one RB. Using FIG. 7 as an example, on REs whose OFDM symbol index is 2 and RE indexes are 0, 2, 4, 6, 8, and 10 in FIG. 7, the OCC of the second DMRS is {1,1,1,1,1,1}. When there are two RBs (that is, twenty-four consecutive subcarriers), an OCC corresponding to the second DMRS is {1,1,1,1,1,1,1,1,1,1,1,1} shown in Table 2 below.

**Table 2**

| RB index | RE index | OCC of a second DMRS | OCC of a first DMRS |
|---|---|---|---|
| 1 | 0 | 1 | |
| | 1 | | |
| | 2 | 1 | 1 |
| | 3 | | |
| | 4 | 1 | |
| | 5 | | |
| | 6 | 1 | $e^{j\frac{\pi}{3}}$ |
| | 7 | | |
| | 8 | 1 | |
| | 9 | | |
| | 10 | 1 | $e^{j\frac{2\pi}{3}}$ |
| | 11 | | |

(continued)

| RB index | RE index | OCC of a second DMRS | OCC of a first DMRS |
|---|---|---|---|
| 2 | 0 | 1 | |
| | 1 | | |
| | 2 | 1 | $e^{j\pi}$ |
| | 3 | | |
| | 4 | 1 | |
| | 5 | | |
| | 6 | 1 | $e^{j\frac{4\pi}{3}}$ |
| | 7 | | |
| | 8 | 1 | |
| | 9 | | |
| | 10 | 1 | $e^{j\frac{5\pi}{3}}$ |
| | 11 | | |

In addition, as shown in the Table 2, if REs occupied by the first DMRS are REs whose indexes are 2, 6, 8, and 10 in REs whose indexes are 0, 2, 4, 6, 8, and 10 and that are occupied by the second DMRS. It may be learned from the foregoing description that an OCC of the first DMRS on REs whose indexes are 2, 6, and 10 needs to be orthogonal to an OCC of the second DMRS on REs whose indexes are 2, 6, and 10.

For example, in the Table 2, an OCC corresponding to the second DMRS on six REs that overlaps the first DMRS is as follows:

$$s_2\left(m\right) = \{1,1,1,1,1,1\};$$

in addition, an OCC corresponding to the DMRS port 1 in the Table 1 on the six REs that overlaps the first DMRS is as follows:

$$s' = \{-1,-1,-1,-1,-1,-1\};$$

and

in addition, the OCC of the first DMRS may be represented by using the following formula:

$$s_1\left(m\right) = [1, e^{j\frac{\pi}{3}}, \ e^{j\frac{2\pi}{3}}, \ e^{j\pi}, \ e^{j\frac{4\pi}{3}}, \ e^{j\frac{5\pi}{3}}] = s_2\left(m\right) \cdot e^{j\frac{\pi m \omega}{3}} \qquad (\omega = 1)$$

m represents a relative index of an RE corresponding to the DMRS, or may be understood as an $m^{th}$ term in an OCC on an RE on which the first DMRS overlaps the second DMRS. It may be learned that the $s_1(m)$ may be considered as

$$s_2\left(m\right) \cdot e^{j\frac{\pi m \omega}{3}}$$

a result of cyclic shift of $s_2(m)$. In , when $\omega = 0$, that is, $s_2(m)$; and when $\omega = 1, 2, 3, 4, 5$, it may be ensured that $s_1(m)$ is orthogonal to $s_2(m)$ and s' respectively. That is, the first DMRS port does not interfere with the DMRS port 0 and the DMRS port 1.

After determining the OCC of the first DMRS, the sending device may send the first DMRS from the first DMRS port by using the first time-frequency resource.

Step 3. The receiving device receives the first DMRS from the first DMRS port by using the first time-frequency resource, and receives the second DMRS from the second DMRS port by using the second time-frequency resource.

The receiving device may first demodulate the first DMRS on the first time-frequency resource, to perform channel estimation on the first DMRS port based on the first DMRS. Then, after interference from the first DMRS is subtracted, the second DMRS on the second time-frequency resource is demodulated, to perform channel estimation on the second DMRS port.

Specifically, when demodulating the first DMRS and the second DMRS, the receiving device may perform reverse processing based on a principle the same as that in the first step and the second step, to obtain the first DMRS from the first time-frequency resource and obtain the second DMRS from the second time-frequency resource. This may not be limited in this application.

In an implementation, when the quantity of subcarriers included in the second time-frequency resource is P times the quantity of subcarriers included in the first time-frequency resource, and P is 2, the OCC of the first DMRS and the OCC corresponding to the first time-frequency resource in the OCC of the second DMRS meet the following Formula (5):

$$s_1(m) = s_2(m) \cdot e^{j\frac{2\pi m \omega_1}{3M}}$$

Formula (5)

$s_1(m)$ represents an $m^{th}$ term in the OCC of the first DMRS, and $s_2(m)$ represents an $m^{th}$ term in the OCC corresponding to the first time-frequency resource in the OCC of the second DMRS; M represents a quantity of RBs corresponding to the second DMRS that are in resource blocks RBs carrying the second time-frequency resource and that are used for determining the OCC of the first DMRS through cyclic shift, and M is a multiple of 2; and $\omega_1$ represents a phase shift factor of the first DMRS. For example, when M is 2, $\omega_1$ may be any one of 1, 2, 3, 4, and 5.

The following describes three manners of mapping a DMRS sequence $r(n)$ of the first DMRS port to each RE.

Manner 1: when a configuration type 1 is configured for a DMRS, and the second DMRS port is the DMRS port in the Table 1, the DMRS sequence $r(n)$ of the first DMRS port may be mapped to each RE by using the following Formula (6):

$$\tilde{\alpha}_{k,l}^{(\tilde{p}_j,\mu)} = e^{j(\frac{2\pi m \omega}{3M})} w_f(k') \cdot w_t(l') r(2n+1)$$
$$k = 4n + \Delta + 2 \quad Configuration\ type\ 1$$
$$k' = 0$$
$$l = \bar{l} + l'$$
$$n = 0,1,\ldots$$

Formula (6)

$\tilde{a}_{k,l}^{(\tilde{p}_j,\mu)}$ represents an intermediate variable of the first DMRS port $\tilde{p}_j$ on the REs whose subcarrier index is $k$ and the OFDM symbol index is $l$. $m = \left\lfloor (\text{mod}(k, M \cdot N_{SC}^{RB}) - 2)/4 \right\rfloor$, m≤6M-1, and $N_{SC}^{RB}$ represents a quantity of subcarriers included in one RB. $\omega$ represents a phase shift factor of the first DMRS, and 0 < $\omega$ < 3M.

$e^{j(\frac{2\pi m \omega}{3M})} w_f(k') \cdot w_t(l')$ represents the OCC of the first DMRS on the corresponding RE. When m=0, an RB is a smallest RB (that is, a first RB) in the M RBs allocated to the sending device.

Values of $w_f(k')$ $w_t(l')$, $\Delta$, and $\omega$ may be determined based on predefined configuration information. For example, the Table 1 may be updated to Table 3 below. Values of $w_f(k')$, $w_t(l')$, $\Delta$, and $\omega$ corresponding to the first DMRS port in the configuration type 1 may be determined based on Table 3 below:

**Table 3**

| $\tilde{p}$ | CDM group λ | Δ | $w_f(k')$ | | $w_t(l')$ | | $\omega$ |
|---|---|---|---|---|---|---|---|
| | | | k' = 0 | k'=1 | l'=0 | l'=1 | |
| 0 | 0 | 0 | +1 | +1 | +1 | +1 | N/A |

(continued)

| $\tilde{p}$ | CDM group λ | | $w_f(k')$ | | $w_t(l')$ | | $\omega$ |
|---|---|---|---|---|---|---|---|
| | | | $k'=0$ | $k'=1$ | $l'=0$ | $l'=1$ | |
| 1 | 0 | 0 | +1 | -1 | +1 | +1 | N/A |
| 2 | 1 | 1 | +1 | +1 | +1 | +1 | N/A |
| 3 | 1 | 1 | +1 | -1 | +1 | +1 | N/A |
| 4 | 0 | 0 | +1 | +1 | +1 | -1 | N/A |
| 5 | 0 | 0 | +1 | -1 | +1 | -1 | N/A |
| 6 | 1 | 1 | +1 | +1 | +1 | -1 | N/A |
| 7 | 1 | 1 | +1 | -1 | +1 | -1 | N/A |
| 8 | 0 | 0 | +1 | +1 | +1 | +1 | 2 |
| 9 | 0 | 0 | +1 | +1 | +1 | +1 | 4 |
| 10 | 1 | 1 | +1 | +1 | +1 | +1 | 2 |
| 11 | 1 | 1 | +1 | +1 | +1 | +1 | 4 |
| 12 | 0 | 0 | +1 | +1 | +1 | -1 | 2 |
| 13 | 0 | 0 | +1 | +1 | +1 | -1 | 4 |
| 14 | 1 | 1 | +1 | +1 | +1 | -1 | 2 |
| 15 | 1 | 1 | +1 | +1 | +1 | -1 | 4 |

In the Table 3, when the allocated DMRS ports are DMRS ports 0 to 7 in the table, and $w_f(k')$, $w_t(l')$, and $\Delta$ of the DMRS ports may be obtained by looking up the table, and then the DMRS sequence is mapped to each RE by using the foregoing Formula (4). In this case, OCCs of the DMRS ports 0 to 7 are unrelated to the phase shift factor $\omega$, that is, the DMRS ports 0 to 7 are not applicable to $\omega$. Therefore, $\omega$ corresponding to the DMRS ports 0 to 7 in the Table 3 is N/A. When the allocated DMRS ports are DMRS ports 8 to 15 in the table, and $w_f(k')$ $w_t(l')$, $\Delta$, and $\omega$ of the DMRS ports may be obtained by looking up the table, and then the DMRS sequence is mapped to each RE by using the foregoing Formula (6). In addition, it should be noted that in the Table 3, only an example in which a value of $\omega$ is 2 or 4 is used for example description. In some scenarios, another value of $\omega$ may be further used, and a value range of another value may be a positive integer of 0 < $\omega$ < 3$M$.

For example, if the second DMRS port is a DMRS port 0 (that is, $\tilde{p}$=0), and the first DMRS port is a DMRS port 8 (that is, $\tilde{p}$=8), the OCC of the first DMRS and the OCC of the second DMRS are as shown in the Table 2. Further, it may be learned that the OCC of the first DMRS is the same as a result obtained after cyclic shift is performed on an OCC corresponding to the first time-frequency resource in the OCC of the second DMRS.

It may be learned from the Table 3 that an OCC of the DMRS port 8 and an OCC of the DMRS port 9 are two orthogonal DMRS ports obtained by performing cyclic shift (a phase shift factor $\omega$ is 2 or 4 respectively) on the OCC of the DMRS port 0. An OCC of the DMRS port 12 and an OCC of the DMRS port 13 are two orthogonal DMRS ports obtained by performing cyclic shift (a phase shift factor $\omega$ is 2 or 4 respectively) on the OCC of the DMRS port 0. An OCC of the DMRS port 10 and an OCC of the DMRS port 11 are two orthogonal DMRS ports obtained by performing cyclic shift (a phase shift factor $\omega$ is 2 or 4 respectively) on the OCC of the DMRS port 2. An OCC of the DMRS port 14 and an OCC of the DMRS port 15 are two orthogonal DMRS ports obtained by performing cyclic shift (a phase shift factor $\omega$ is 2 or 4 respectively) on the OCC of the DMRS port 6. In other words, in this case, a total of sixteen DMRS ports may be supported to be orthogonal. Compared with eight DMRS ports in the Table 1, eight DMRS ports are newly added. If four phase shift factors (for example, $\omega$ =1, 2, 4, and 5) are respectively used when cyclic shift is performed on an OCC of one DMRS port, a total of twenty-four DMRS ports may be supported to be orthogonal.

In other words, the Manner 1 may be understood as determining the OCC of the first DMRS by using a value of the phase shift factor $\omega$ corresponding to the first DMRS port in the predefined configuration information (for example, the Table 3).

Manner 2: when a configuration type 1 is configured for a DMRS, and the second DMRS port is the DMRS port in the Table 1, the DMRS sequence $r(n)$ of the first DMRS port may be mapped to each RE by using the following Formula (7):

$$\tilde{\alpha}_{k,l}^{(\tilde{p}_j,\mu)} = e^{\frac{j2\pi m\omega}{3M}} w_f(k') \cdot w_t(l') r(2n)$$

$$k = 4n + \Delta + c \quad \textit{Configuration type 1}$$

$$k' = 0$$

$$l = \bar{l} + l'$$

$$n = 0, 1, \dots$$

$$c = 0, 2 \qquad\qquad \text{Formula (7)}$$

$\tilde{\alpha}_{k,l}^{(\tilde{p}_j,\mu)}$ represents an intermediate variable of the first DMRS port $\tilde{p}_j$ on the REs whose subcarrier index is $k$ and the OFDM symbol index is $m = \left\lfloor (\mathrm{mod}(k, M \cdot N_{SC}^{RB}) - 2) / 4 \right\rfloor$, $m \le 6M-1$, and $N_{SC}^{RB}$ represents a quantity of subcarriers included in one RB. $e^{j(\frac{2\pi m\omega}{3M})} w_f(k') \cdot w_t(l')$ represents the OCC of the first DMRS on the corresponding RE. When m=0, an RB is a smallest RB (that is, a first RB) in the M RBs allocated to the sending device. An offset location $C$ is used for representing a location of the first time-frequency resource on the second time-frequency resource.

$\omega$ is a constant and $0 < \omega < 3M$. For example, $\omega$ may be any one of 1, 2, 3, 4, and 5. In addition, values of $w_f(k')$, $w_t(l')$, $\Delta$, and $\omega$ may be determined based on predefined configuration information. For example, the Table 1 may be updated to Table 4 below. Values of $w_f(k')$, $w_t(l')$, $\Delta$, and $\omega$ in the configuration type 1 may be determined based on Table 4 below:

**Table 4**

| $\tilde{p}$ | CDM group $\lambda$ | | $w_f(k')$ | | $w_t(l')$ | | $C$ |
|---|---|---|---|---|---|---|---|
| | | | $k' = 0$ | $k'=1$ | $l'=0$ | $l'=1$ | |
| 0 | 0 | 0 | +1 | +1 | +1 | +1 | N/A |
| 1 | 0 | 0 | +1 | -1 | +1 | +1 | N/A |
| 2 | 1 | 1 | +1 | +1 | +1 | +1 | N/A |
| 3 | 1 | 1 | +1 | -1 | +1 | +1 | N/A |
| 4 | 0 | 0 | +1 | +1 | +1 | -1 | N/A |
| 5 | 0 | 0 | +1 | -1 | +1 | -1 | N/A |
| 6 | 1 | 1 | +1 | +1 | +1 | -1 | N/A |
| 7 | 1 | 1 | +1 | -1 | +1 | -1 | N/A |
| 8 | 0 | 0 | +1 | +1 | +1 | +1 | 0 |
| 9 | 0 | 0 | +1 | +1 | +1 | +1 | 2 |
| 10 | 1 | 1 | +1 | +1 | +1 | +1 | 0 |
| 11 | 1 | 1 | +1 | +1 | +1 | +1 | 2 |
| 12 | 0 | 0 | +1 | +1 | +1 | -1 | 0 |
| 13 | 0 | 0 | +1 | +1 | +1 | -1 | 2 |
| 14 | 1 | 1 | +1 | +1 | +1 | -1 | 0 |
| $k' = 0$ | $k'=1$ | $l'=0$ | $l'=1$ | | | | |
| 15 | 1 | 1 | +1 | +1 | +1 | -1 | 2 |

OCCs of the DMRS ports 0 to 7 are unrelated to the offset location $C$ and the phase shift factor $\omega$, that is, the DMRS ports 0 to 7 are not applicable to $C$ and $\omega$. Therefore, $C$ and $\omega$ corresponding to the DMRS ports 0 to 7 in the Table 3 are N/A.

In other words, the Manner 2 may be understood as determining the OCC of the first DMRS by using an offset location c corresponding to the first DMRS port in the predefined configuration information (for example, the Table 4).

Manner 3: similar to the Manner 2, when a configuration type 1 is configured for a DMRS, and the second DMRS port is the DMRS port in the Table 1, the DMRS sequence $r(n)$ of the first DMRS port may be mapped to each RE by using the foregoing Formula (7). Different from the Manner 2, a value of $\omega$ in the Manner 3 needs to be determined by using predefined configuration information. For example, the Table 1 may be updated to Table 5 below. Values of $w_f(k')$, $w_t(l')$, $\Delta$, $\omega$, and $C$ in the configuration type 1 may be determined based on Table 5 below:

**Table 5**

| $\bar{p}$ | CDM group $\lambda$ | | $w_f(k')$ | | $w_t(l')$ | | $C$ | $\omega$ |
|---|---|---|---|---|---|---|---|---|
| | | | $k' = 0$ | $k'=1$ | $l'=0$ | $l'=1$ | | |
| 0 | 0 | 0 | +1 | +1 | +1 | +1 | N/A | N/A |
| 1 | 0 | 0 | +1 | -1 | +1 | +1 | N/A | N/A |
| 2 | 1 | 1 | +1 | +1 | +1 | +1 | N/A | N/A |
| 3 | 1 | 1 | +1 | -1 | +1 | +1 | N/A | N/A |
| 4 | 0 | 0 | +1 | +1 | +1 | -1 | N/A | N/A |
| 5 | 0 | 0 | +1 | -1 | +1 | -1 | N/A | N/A |
| 6 | 1 | 1 | +1 | +1 | +1 | -1 | N/A | N/A |
| 7 | 1 | 1 | +1 | -1 | +1 | -1 | N/A | N/A |
| 8 | 0 | 0 | +1 | +1 | +1 | +1 | 0 | 2 |
| $k'=0$ | $k'=1$ | $l'=0$ | $l'=1$ | | | | | |
| 9 | 0 | 0 | +1 | +1 | +1 | +1 | 2 | 2 |
| 10 | 1 | 1 | +1 | +1 | +1 | +1 | 0 | 2 |
| 11 | 1 | 1 | +1 | +1 | +1 | +1 | 2 | 2 |
| 12 | 0 | 0 | +1 | +1 | +1 | -1 | 0 | 4 |
| 13 | 0 | 0 | +1 | +1 | +1 | -1 | 2 | 4 |
| 14 | 1 | 1 | +1 | +1 | +1 | -1 | 0 | 4 |
| 15 | 1 | 1 | +1 | +1 | +1 | -1 | 2 | 4 |

OCCs of the DMRS ports 0 to 7 are unrelated to the offset location $C$, that is, the DMRS ports 0 to 7 are not applicable to $C$. Therefore, $C$ corresponding to the DMRS ports 0 to 7 in the Table 3 is N/A. In addition, it should be noted that in the Table 5, only an example in which a value of $\omega$ is 2 or 4 is used for example description. In some scenarios, another value of $\omega$ may be further used, and a value range of another value may be a positive integer of $0 < \omega < 3M$.

In other words, the Manner 2 may be understood as determining the OCC of the first DMRS by using an offset location c corresponding to the first DMRS port and a value of the phase shift factor $\omega$ corresponding to the first DMRS port in the predefined configuration information (for example, the Table 5).

In an implementation, as shown in FIG. 8, the method provided in this application further includes the following steps.

S203: The receiving device sends first indication information, so that the sending device receives the first indication information.

The first indication information indicates to the sending device that the sending device sends the first DMRS from the first DMRS port by using the first time-frequency resource.

Specifically, the first indication information specifically indicates at least one of the phase shift factor of the first DMRS or the location of the first time-frequency resource in the second time-frequency resource. In addition, the first indication information may further indicate parameters such as a CDM group index of the first DMRS, a frequency domain OCC of the first DMRS (that is, $w_f(k')$), and a time domain OCC of the first DMRS (that is, $w_t(l')$,

For example, when the sending device is a terminal device, and the receiving device is a network device, the network device sends the first indication information to the terminal device, so that the terminal device determines the first DMRS port and sends the first DMRS from the first DMRS port by using the first time-frequency resource.

The following describes content indicated by the first indication information in three cases.

In a first case, the first indication information indicates the phase shift factor of the first DMRS. The phase shift factor of the first DMRS is used for representing a phase difference between the OCC of the first DMRS and an OCC corresponding to the first time-frequency resource in the OCC of the second DMRS.

For example, an example in which a manner of mapping the DMRS sequence $r(n)$ of the first DMRS port to each RE in the Manner 1 is used in the foregoing description. The first indication information may indicate the value of the phase shift factor $\omega$ corresponding to the first DMRS. In this way, after a value of $\omega$ corresponding to the first DMRS, $w_f(k')$ of the first DMRS, $w_t(l')$ of the first DMRS, and the CDM group index are known, the sending device may map the DMRS sequence $r(n)$ of the first DMRS port to each RE by using the foregoing Formula (6).

In a second case, the first indication information indicates a location of the first time-frequency resource in the second time-frequency resource.

For example, an example in which a manner of mapping the DMRS sequence $r(n)$ of the first DMRS port to each RE in the Manner 2 is used in the foregoing description. The first indication information may indicate the offset location $C$ corresponding to the first DMRS. In this way, after the offset location $C$ corresponding to the first DMRS, $w_f(k')$ of the first DMRS, $w_t(l')$ of the first DMRS, and the CDM group index are known, because $\omega$ may be a constant, the sending device may map the DMRS sequence $r(n)$ of the first DMRS port to each RE by using the foregoing Formula (7).

In a third case, the first indication information indicates the phase shift factor of the first DMRS and a location of the first time-frequency resource in the second time-frequency resource.

For example, an example in which a manner of mapping the DMRS sequence $r(n)$ of the first DMRS port to each RE in the Manner 3 is used in the foregoing description. The first indication information may indicate the phase shift factor of the first DMRS and the location of the first time-frequency resource in the second time-frequency resource. In this way, after the value of $\omega$ corresponding to the first DMRS, the offset location $C$ corresponding to the first DMRS, $w_f(k')$ of the first DMRS, $w_t(l')$ of the first DMRS, and the CDM group index are known, the sending device may map the DMRS sequence $r(n)$ of the first DMRS port to each RE by using the foregoing Formula (7).

In a possible design, the first indication information includes first information indicating a port index of the first DMRS port. Further, the method further includes: the sending device determines at least one of the phase shift factor of the first DMRS or the location of the first time-frequency resource in the second time-frequency resource based on the first information in the first indication information.

In other words, in the foregoing design, the first indication information including the first information is sent to the sending device by using the receiving device. Therefore, the sending device may determine the port index of the first DMRS port based on the first information, and further determine at least one of the phase shift factor of the first DMRS or the location of the first time-frequency resource in the second time-frequency resource based on the port index of the first DMRS port. For example, the Table 3, the Table 4, or the Table 5 is stored in the sending device. Further, after determining a first DMRS port index, the sending device may determine the phase shift factor of the first DMRS or the location of the first time-frequency resource in the second time-frequency resource by looking up the table. Then, the sending device may map the DMRS sequence $r(n)$ of the first DMRS port to each RE based on at least one of the phase shift factor of the first DMRS or the location of the first time-frequency resource in the second time-frequency resource, that is, send the first DMRS from the first DMRS port by using the first time-frequency resource. Therefore, an effect that the first indication information specifically indicates at least one of the phase shift factor of the first DMRS or the location of the first time-frequency resource in the second time-frequency resource is achieved.

For example, the first indication information may be a downlink control indicator (downlink control indicator, DCI). In other words, the first DMRS port index may be indicated in the DCI sent by the receiving device to the sending device.

Example 1. When a rank (rank) of the DMRS port of the sending device is 1, a value (value) of a field representing the first indication information in the DCI may be determined by using Table 6 below:

**Table 6**

| Value | Quantity of CDM groups | DMRS port index. | Quantity of front-loaded DMRS symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |

(continued)

| Value | Quantity of CDM groups | DMRS port index. | Quantity of front-loaded DMRS symbols |
|---|---|---|---|
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 | 2 | 8 | 2 |
| 15 | 2 | 9 | 2 |
| 16 | 2 | 10 | 2 |
| 17 | 2 | 11 | 2 |
| 18 | 2 | 12 | 2 |
| 19 | 2 | 13 | 2 |
| 20 | 2 | 14 | 2 |
| 21 | 2 | 15 | 2 |
| 22-31 | Reserved | Reserved | Reserved |

In the Table 6, a first column (value) represents a value of a field that represents the first indication information in the DCI; a second column (a quantity of CDM groups) represents a quantity of currently configured CDM groups (number of DMRS CDM group(s) without data); a third column (a DMRS port index) represents a port index of a DMRS port allocated to the sending device; and a fourth column (a quantity of front-loaded DMRS symbols) represents a quantity of front-loaded DMRS symbols configured in the current system.

Values 14 to 21 may indicate the DMRS ports 8 to 15 in the Table 3, the Table 4, or the Table 5, that is, may indicate the first DMRS port.

In addition, if the first indication information is transmitted in the DCI in the manner shown in the Table 6, 5 bits in the DCI need to be occupied. When a table separately indicates the DMRS ports 8 to 15 (referred to as "DMRS ports 8 to 15" below) in the Table 3, the Table 4, or the Table 5, as shown in Table 7:

**Table 7**

| Value | Quantity of CDM groups | DMRS port index. | Quantity of front-loaded DMRS symbols |
|---|---|---|---|
| 0 | 2 | 8 | 2 |
| 1 | 2 | 9 | 2 |
| 2 | 2 | 10 | 2 |
| 3 | 2 | 11 | 2 |
| 4 | 2 | 12 | 2 |
| 5 | 2 | 13 | 2 |
| 6 | 2 | 14 | 2 |
| 7 | 2 | 15 | 2 |

It may be learned that if the first indication information is transmitted in the DCI in the manner shown in the Table 7, 3 bits in the DCI need to be occupied.

Example 2. When a rank (rank) of the DMRS port of the sending device is 2, a value (value) of a field representing the first indication information in the DCI may be determined by using Table 8 below:

**Table 8**

| Value | Quantity of CDM groups | DMRS port index. | Quantity of front-loaded DMRS symbols |
|---|---|---|---|
| 0 | 1 | 0, 1 | 1 |
| 1 | 2 | 0, 1 | 1 |
| 2 | 2 | 2, 3 | 1 |
| 3 | 2 | 0, 2 | 1 |
| 4 | 2 | 0, 1 | 2 |
| 5 | 2 | 2, 3 | 2 |
| 6 | 2 | 4, 5 | 2 |
| 7 | 2 | 6, 7 | 2 |
| 8 | 2 | 0, 4 | 2 |
| 9 | 2 | 2, 6 | 2 |
| 10 | 2 | 8, 9 | 2 |
| 11 | 2 | 10, 11 | 2 |
| 12 | 2 | 12, 13 | 2 |
| 13 | 2 | 14, 15 | 2 |
| 14 | 2 | 8, 12 | 2 |
| 15 | 2 | 10, 14 | 2 |

Values 10 to 15 may indicate that DMRS ports 8 to 15 are included in a DMRS port configured for the sending device, that is, the values 10 to 15 may indicate the first DMRS port.

In addition, if the first indication information is transmitted in the DCI in the manner shown in the Table 8, 4 bits in the DCI need to be occupied. When a table separately indicates indications including the DMRS ports 8 to 15, as shown in Table 9:

**Table 9**

| Value | Quantity of CDM groups | DMRS port index. | Quantity of front-loaded DMRS symbols |
|---|---|---|---|
| 0 | 2 | 8, 9 | 2 |
| 1 | 2 | 10, 11 | 2 |
| 2 | 2 | 12, 13 | 2 |
| 3 | 2 | 14, 15 | 2 |
| 4 | 2 | 8, 12 | 2 |
| 5 | 2 | 10, 14 | 2 |
| 6-7 | Reserved | Reserved | Reserved |

It may be learned that if the first indication information is transmitted in the DCI in the manner shown in the Table 9, 3 bits in the DCI need to be occupied. In addition, only a part of the values may also be indicated. For example, only values 0 to 3 in the Table 9 are indicated. In this case, only 2 bits are needed for indication.

Example 3. When a rank (rank) of the DMRS port of the sending device is 3, a value (value) of a field representing the first indication information in the DCI may be determined by using Table 10 below:

**Table 10**

| Value | Quantity of CDM groups | DMRS port index. | Quantity of front-loaded DMRS symbols |
|---|---|---|---|
| 0 | 2 | 0-2 | 1 |
| 1 | 2 | 0, 1, 4 | 2 |

(continued)

| Value | Quantity of CDM groups | DMRS port index. | Quantity of front-loaded DMRS symbols |
|---|---|---|---|
| 2 | 2 | 2, 3, 6 | 2 |
| 3 | 2 | 8, 9, 12 | 2 |
| 4 | 2 | 10, 11, 14 | 2 |
| 5-15 | Reserved | Reserved | Reserved |

A value 3 and the value 3 may indicate that the DMRS port configured for the sending device includes the DMRS ports 8 to 15.

In addition, another port combination may also be considered, for example, as shown in Table 11:

**Table 11**

| Value | Quantity of CDM groups | DMRS port index. | Quantity of front-loaded DMRS symbols |
|---|---|---|---|
| 0 | 2 | 0-2 | 1 |
| 1 | 2 | 0, 1, 4 | 2 |
| 2 | 2 | 2, 3, 6 | 2 |
| 3 | 2 | 8, 9, 12 | 2 |
| 4 | 2 | 10, 11, 14 | 2 |
| 5 | 2 | 8, 9, 14 | 2 |
| 6 | 2 | 10, 11, 13 | 2 |
| 7 | 2 | 8, 9, 13 | 2 |
| 8-15 | Reserved | Reserved | Reserved |

In addition, a table may be further separately used for transmitting, in the DCI, indications including the DMRS ports 8 to 15, as shown in Table 12:

**Table 12**

| Value | Quantity of CDM groups | DMRS port index. | Quantity of front-loaded DMRS symbols |
|---|---|---|---|
| 0 | 2 | 8, 9, 12 | 2 |
| 1 | 2 | 10, 11, 14 | 2 |

Example 4. When a rank (rank) of the DMRS port of the sending device is 4, a value (value) of a field representing the first indication information in the DCI may be determined by using Table 13 below:

**Table 13**

| Value | Quantity of CDM groups | DMRS port index. | Quantity of front-loaded DMRS symbols |
|---|---|---|---|
| 0 | 2 | 0-3 | 1 |
| 1 | 2 | 0, 1, 4, 5 | 2 |
| 2 | 2 | 2, 3, 6, 7 | 2 |
| 3 | 2 | 0, 2, 4, 6 | 2 |
| 4 | 2 | 8, 9, 12, 13 | 2 |
| 5 | 2 | 10, 11, 14, 15 | 2 |
| 6-15 | Reserved | Reserved | Reserved |

In addition, a table may be further separately used for transmitting, in the DCI, indications including the DMRS ports 8 to 15, as shown in Table 14:

**Table 14**

| Value | Quantity of CDM groups | DMRS port index. | Quantity of front-loaded DMRS symbols |
|---|---|---|---|
| 0 | 2 | 8, 9, 12, 13 | 2 |
| 1 | 2 | 10, 11, 14, 15 | 2 |

It may be learned that if the first indication information is transmitted in the DCI in the manner shown in the Table 13, 2 bits in the DCI need to be occupied.

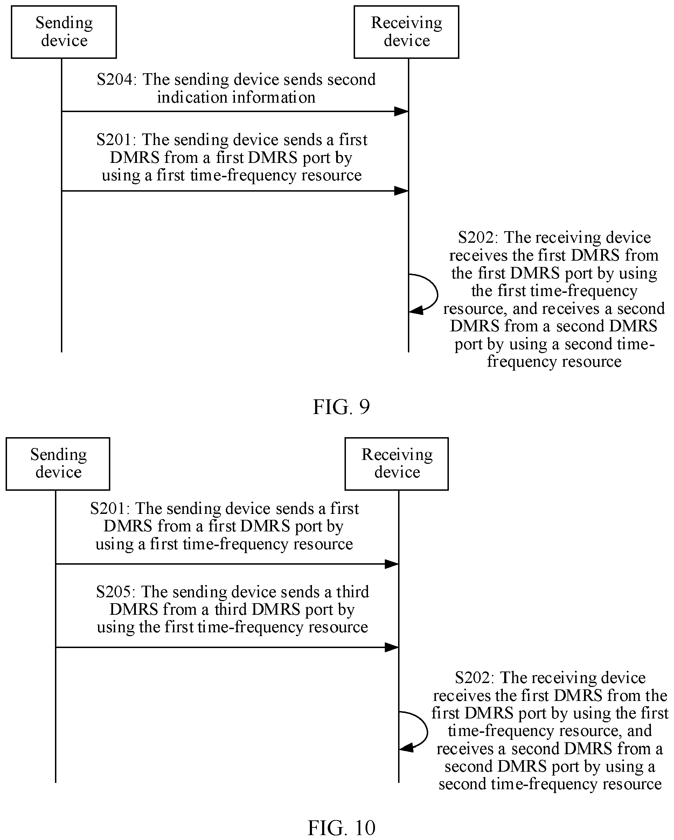

In another implementation, as shown in FIG. 9, the method provided in this application further includes the following steps.

S204: The sending device sends second indication information to the receiving device.

The second indication information indicates that the receiving device receives the first DMRS from the first DMRS port by using the first time-frequency resource.

Specifically, the second indication information is specifically used for indicating at least one of the phase shift factor of the first DMRS or the location of the first time-frequency resource in the second time-frequency resource.

For example, when the sending device is a network device, and the receiving device is a terminal device, the network device sends the second indication information to the terminal device, so that the terminal device determines the first DMRS port and receives the first DMRS from the first DMRS port by using the first time-frequency resource.

For a specific implementation of the content indicated by the second indication information, refer to the foregoing description of the content indicated by the first indication information in S203. Details are not repeated.

The following describes an implementation process of the method provided in this application when the sending device separately sends a DMRS to the receiving device by using a plurality of DMRS ports. It should be noted that the following description mainly describes an implementation process in which the sending device separately sends the DMRS to the receiving device by using three DMRS ports. It may be understood that related descriptions may also be applied to an implementation process in which the sending device separately sends the DMRS to the receiving device by using four or more DMRS ports.

In an implementation, as shown in FIG. 10, the method further includes the following steps.

S205: The sending device sends a third DMRS from a third DMRS port by using the first time-frequency resource.

Further, the receiving device may receive the third DMRS from the third DMRS port by using the first time-frequency resource.

An orthogonal cover code OCC of the third DMRS is orthogonal to an OCC corresponding to the first time-frequency resource in an OCC of the second DMRS.

In a possible design, when the OCC of the first DMRS and the OCC corresponding to the first timefrequency resource in the OCC of the second DMRS meet $s_1(m) = s_2(m) \cdot e^{j\frac{2\pi m \omega_1}{3M}}$ (that is, the foregoing Formula (5)), the OCC of the third DMRS and the OCC corresponding to the first time-frequency resource in the OCC of the second DMRS meet the following Formula (7):

$$s_3(m) = s_2(m) \cdot e^{j\frac{2\pi m \omega_2}{3M}} \qquad \text{Formula (7)}$$

$s_3(m)$ represents an $m^{th}$ term in the OCC of the third DMRS, and $s_2(m)$ represents the $m^{th}$ term in the OCC corresponding to the first time-frequency resource in the OCC of the second DMRS; M represents the quantity of RBs corresponding to the second DMRS that are in the resource blocks RBs carrying the second time-frequency resource and that are used for determining the OCC of the first DMRS through the cyclic shift, and M is the multiple of 2; and $\omega_2$ represents a phase shift factor of the third DMRS, and $\omega_1$ is different from $\omega_2$.

In the foregoing implementation, it is considered that when cyclic shift is performed on an OCC of a DMRS (that is, the second DMRS) of a specific DMRS port (that is, the second DMRS port), to obtain an OCC of a DMRS (that is, the first DMRS) of another DMRS port (that is, the first DMRS port), a plurality of different OCCs may be obtained by using different phase shift factors $\omega$. OCCs of DMRSs corresponding to the plurality of different OCCs may all be orthogonal to an OCC of a DMRS of an original specific DMRS port. Therefore, in the foregoing implementation, a third DMRS that does not cause interference to the first DMRS port and the second DMRS port may be transmitted on the first time-frequency resource multiplexed by the first DMRS port and the second DMRS port. In this way, a quantity of orthogonal DMRS ports supported by the system is further increased without increasing overheads of the time-frequency resource allocated to the DMRS.

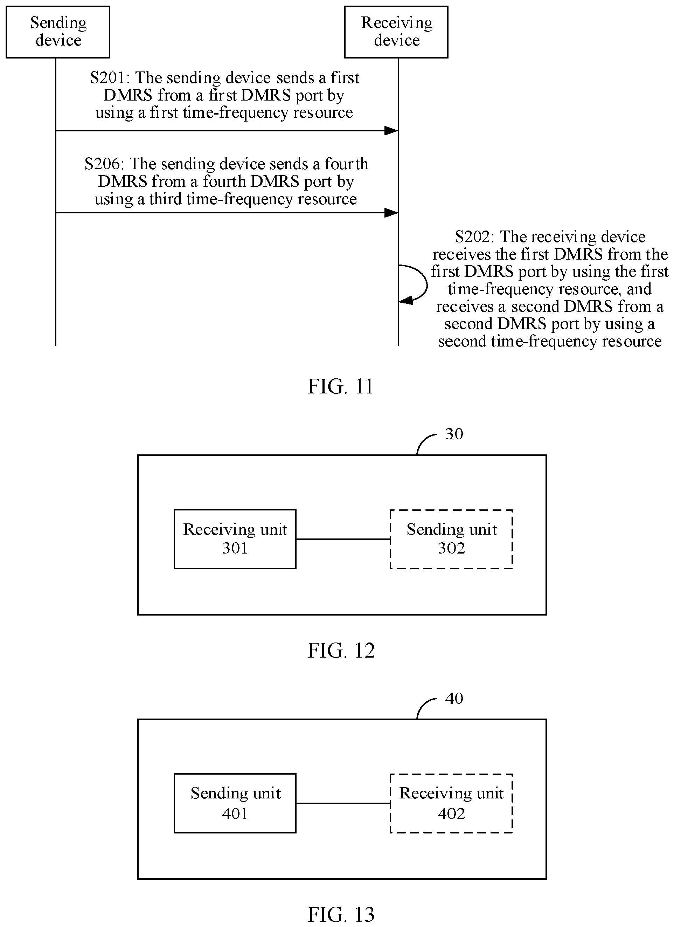

In another implementation, as shown in FIG. 11, the method may further include the following steps.

S206: The sending device sends a fourth DMRS from a fourth DMRS port by using the third time-frequency resource.

The third time-frequency resource is included in the second time-frequency resource, and the third time-frequency resource does not overlap the first time-frequency resource. An OCC of the fourth DMRS is orthogonal to an OCC corresponding to the third time-frequency resource in the OCC of the second DMRS.

In other words, in the method provided in this application, a part of time-frequency resources (namely, the third time-frequency resource) in the second time-frequency resource of the second DMRS port except the first time-frequency resource may be multiplexed by using the fourth DMRS port, thereby further increasing a quantity of orthogonal DMRS ports supported by the system.

Specifically, for a specific implementation in which the OCC of the fourth DMRS is orthogonal to the OCC corresponding to the third time-frequency resource in the OCC of the second DMRS, refer to the foregoing corresponding description in which the OCC of the first DMRS is orthogonal to the OCC corresponding to the first time-frequency resource in the OCC of the second DMRS. Details are not repeated.

In a possible design, a quantity of subcarriers included in the second time-frequency resource is P times a quantity of subcarriers included in the third time-frequency resource, and P is an integer greater than 1. On an OFDM symbol in time domain, the third time-frequency resource includes: a subcarrier set in which subcarriers are distributed at equal intervals in the subcarriers included in the second time-frequency resource. The two adjacent subcarriers in the subcarrier set are spaced by the P subcarriers included in the second time-frequency resource.

For example, the second DMRS port may be the DMRS port 0 in the Table 4, the first DMRS may be the DMRS port 8 in the Table 4, and the fourth DMRS may be the DMRS port 9 in the Table 4. Using two RBs (that is, 24 consecutive subcarriers) as an example, values of REs of the OCC of the second DMRS, the OCC of the first DMRS, and the OCC of the fourth DMRS on the two RBs are shown in Table 15 below:

**Table 15**

| RB index | RE index | OCC of a second DMRS | OCC of a first DMRS | OCC of a fourth DMRS |
|---|---|---|---|---|
| 1 | 0 | 1 | | 1 |
| | 1 | | | |
| | 2 | 1 | 1 | |
| | 3 | | | |
| | 4 | 1 | | $e^{j\frac{\pi}{3}}$ |
| | 5 | | | |
| | 6 | 1 | $e^{j\frac{\pi}{3}}$ | |
| | 7 | | | |
| | 8 | 1 | | $e^{j\frac{2\pi}{3}}$ |
| | 9 | | | |
| | 10 | 1 | $e^{j\frac{2\pi}{3}}$ | |
| | 11 | | | |

(continued)

| RB index | RE index | OCC of a second DMRS | OCC of a first DMRS | OCC of a fourth DMRS |
|---|---|---|---|---|
| 2 | 0 | 1 | | $e^{j\pi}$ |
| | 1 | | | |
| | 2 | 1 | $e^{j\pi}$ | |
| | 3 | | | |
| | 4 | 1 | | $e^{j\frac{4\pi}{3}}$ |
| | 5 | | | |
| | 6 | 1 | $e^{j\frac{4\pi}{3}}$ | |
| | 7 | | | |
| | 8 | 1 | | $e^{j\frac{5\pi}{3}}$ |
| | 9 | | | |
| | 10 | 1 | $e^{j\frac{5\pi}{3}}$ | |
| | 11 | | | |

In the foregoing implementation, the fourth DMRS of the fourth DMRS port that does not cause interference to the first DMRS port and the second DMRS port is transmitted on the third time-frequency resource in the second time-frequency resource other than the first time-frequency resource. In this way, a quantity of orthogonal DMRS ports supported by the system is further increased without increasing overheads of the time-frequency resource allocated to the DMRS.

It may be understood that, in embodiments of this application, the receiving device and/or the sending device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed. Embodiments provided in this application may be associated with each other, and may be mutually referred or quoted.

The foregoing embodiments mainly describe the solutions provided in embodiments of this application from a perspective of interaction between devices. It should be understood that to implement corresponding functions, the receiving device or the sending device includes corresponding hardware structures and/or software modules for performing the functions. A person of ordinary skill in the art should easily be aware that, in combination with the units in the examples described in embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the device (the receiving device or the sending device) may be divided into function modules based on the foregoing method examples. For example, each function module may be divided based on each corresponding function, or two or more functions may be integrated into one processing module. The integrated module may be implemented in a form of hardware, or may be implemented in a form of a software functional module. Optionally, in embodiments of this application, division into modules is used as an example, and is merely logical function division. In actual implementation, another division manner may be used.

FIG. 12 is a schematic diagram of composition of a communication apparatus 30 according to an embodiment of this application. The communication apparatus 30 may be a chip or a system on the chip in a receiving device. The communication apparatus 30 may be configured to perform a function of the receiving device designed in the foregoing embodiments. In a possible implementation, the communication apparatus 30 includes:

a receiving unit 301, configured to receive a first DMRS from a first demodulation reference signal DMRS port by using a first time-frequency resource, and receive a second DMRS from a second DMRS port by using a second time-frequency resource.

The first time-frequency resource is a part of time-frequency resources in the second time-frequency resource, and an orthogonal cover code OCC of the first DMRS is orthogonal to an OCC corresponding to the first time-frequency resource in an OCC of the second DMRS.

In an implementation, the orthogonal cover code OCC of the first DMRS is the same as a result obtained after cyclic shift is performed on the OCC corresponding to the first time-frequency resource in the OCC of the second DMRS.

In an implementation, a quantity of subcarriers included in the second time-frequency resource is P times a quantity of subcarriers included in the first time-frequency resource, and P is an integer greater than 1; and on an orthogonal frequency division multiplexing OFDM symbol in time domain, the first time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

In an implementation, P=2; and the OCC of the first DMRS and the OCC corresponding to the first time-frequency resource in the OCC of the second DMRS meet the following Formula 1:

$$s_1(m) = s_2(m) \cdot e^{j\frac{2\pi m\omega_1}{3M}} \qquad \text{Formula 1}$$

$s_1(m)$ represents an $m^{th}$ term in the OCC of the first DMRS, and $s_2(m)$ represents an $m^{th}$ term in the OCC corresponding to the first time-frequency resource in the OCC of the second DMRS; M represents a quantity of RBs corresponding to the second DMRS that are in resource blocks RBs carrying the second time-frequency resource and that are used for determining the OCC of the first DMRS through cyclic shift, and M is a multiple of 2; and $\omega_1$ represents a phase shift factor of the first DMRS.

In an implementation, the receiving unit 301 is further configured to receive a third DMRS from a third DMRS port by using the first time-frequency resource, where an OCC of the third DMRS and the OCC corresponding to the first time-frequency resource in the OCC of the second DMRS meet the following Formula 2:

$$s_3(m) = s_2(m) \cdot e^{j\frac{2\pi m\omega_2}{3M}} \qquad \text{Formula 2}$$

$s_3(m)$ represents an $m^{th}$ term in the OCC of the third DMRS, and $s_2(m)$ represents the $m^{th}$ term in the OCC corresponding to the first time-frequency resource in the OCC of the second DMRS; M represents the quantity of RBs corresponding to the second DMRS that are in the RBs carrying the second time-frequency resource and that are used for determining the OCC of the first DMRS through the cyclic shift, and M is the multiple of 2; and $\omega_2$ represents a phase shift factor of the third DMRS, and $\omega_2$ is different from $\omega_1$.

In an implementation, the receiving unit 301 is further configured to receive a fourth DMRS from a fourth DMRS port by using a third time-frequency resource; the third time-frequency resource is included in the second time-frequency resource, and the third time-frequency resource does not overlap the first time-frequency resource; and an orthogonal cover code OCC of the fourth DMRS is orthogonal to an OCC corresponding to the third time-frequency resource in the OCC of the second DMRS.

In an implementation, a quantity of subcarriers included in the second time-frequency resource is P times a quantity of subcarriers included in the third time-frequency resource, and P is an integer greater than 1; and on an OFDM symbol in time domain, the third time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

In an implementation, the communication apparatus 30 further includes a sending unit 302, where the sending unit 302 is configured to send first indication information, where the first indication information indicates, to a sending device, at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the sending device is a device that sends the first DMRS from the first DMRS port by using the first time-frequency resource.

In an implementation, the receiving unit 301 is further configured to receive second indication information from the sending device, where the second indication information indicates at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the sending device is the device that sends the first DMRS from the first DMRS port by using the first time-frequency resource.

It may be understood that for specific descriptions of functions of the units in the communication apparatus 30, refer to the method embodiments, for example, descriptions of related steps performed by the corresponding receiving device in embodiments shown in FIG. 6 or FIG. 8 to FIG. 10. Details are not repeated.

FIG. 13 is a schematic diagram of composition of another communication apparatus 40 according to an embodiment of this application. The communication apparatus 40 may be a chip or a system on the chip in a sending device. The communication apparatus 40 may be configured to perform a function of the sending device in the foregoing embodiments. In a possible implementation, the communication apparatus 40 includes:

a sending unit 401, configured to send a first DMRS from a first demodulation reference signal DMRS port by using a first time-frequency resource, where the first time-frequency resource is included in a second time-frequency resource, the second time-frequency resource is a time-frequency resource used for mapping a second DMRS of a second DMRS port, and an orthogonal cover code OCC of the first DMRS is orthogonal to an OCC corresponding to the first time-frequency resource in an OCC of the second DMRS.

In an implementation, the orthogonal cover code OCC of the first DMRS is the same as a result obtained after cyclic shift is performed on the OCC corresponding to the first time-frequency resource in the OCC of the second DMRS.

In an implementation, a quantity of subcarriers included in the second time-frequency resource is P times a quantity of subcarriers included in the first time-frequency resource, and P is an integer greater than 1; and on an orthogonal frequency division multiplexing OFDM symbol in time domain, the first time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

In an implementation, P=2; and the OCC of the first DMRS and the OCC corresponding to the first time-frequency resource in the OCC of the second DMRS meet the following Formula 1:

$$s_1(m) = s_2(m) \cdot e^{j\frac{2\pi m \omega_1}{3M}} \qquad \text{Formula 1}$$

$s_1(m)$ represents an $m^{th}$ term in the OCC of the first DMRS, and $s_2(m)$ represents an $m^{th}$ term in the OCC corresponding to the first time-frequency resource in the OCC of the second DMRS; M represents a quantity of RBs corresponding to the second DMRS that are in resource blocks RBs carrying the second time-frequency resource and that are used for determining the OCC of the first DMRS through cyclic shift, and M is a multiple of 2; and $\omega_1$ represents a phase shift factor of the first DMRS.

In an implementation, the sending unit 401 is further configured to send a third DMRS from a third DMRS port by using the first time-frequency resource, where an OCC of the third DMRS and the OCC corresponding to the first time-frequency resource in the OCC of the second DMRS meet the following Formula 2:

$$s_3(m) = s_2(m) \cdot e^{j\frac{2\pi m \omega_2}{3M}} \qquad \text{Formula 2}$$

$s_3(m)$ represents an $m^{th}$ term in the OCC of the third DMRS, and $s_2(m)$ represents the $m^{th}$ term in the OCC corresponding to the first time-frequency resource in the OCC of the second DMRS; M represents the quantity of RBs corresponding to the second DMRS that are in the resource blocks RBs carrying the second time-frequency resource and that are used for determining the OCC of the first DMRS through the cyclic shift, and M is the multiple of 2; and $\omega_2$ represents a phase shift factor of the third DMRS, and $\omega_1$ is different from $\omega_2$.

In an implementation, the sending unit 401 is further configured to send a third DMRS from a third DMRS port by using a third time-frequency resource, where the third time-frequency resource is included in the second time-frequency resource, and the third time-frequency resource does not overlap the first time-frequency resource; and the orthogonal cover code OCC of the third DMRS is orthogonal to an OCC corresponding to the third time-frequency resource in the OCC of the second DMRS.

In an implementation, a quantity of subcarriers included in the second time-frequency resource is P times a quantity of subcarriers included in the third time-frequency resource, and P is an integer greater than 1; and on an OFDM symbol in time domain, the third time-frequency resource includes: a subcarrier set in which subcarriers are distributed at equal intervals in the subcarriers included in the second time-frequency resource; and two adjacent subcarriers in the subcarrier set are spaced by P-1 subcarriers included in the second time-frequency resource.

In an implementation, the communication apparatus further includes a receiving unit 402, where the receiving unit 402 is configured to receive first indication information, where the first indication information indicates at least one of the phase shift factor of the first DMRS or a location of the first time-frequency resource in the second time-frequency resource; and the phase shift factor of the first DMRS is used for representing a phase difference between the OCC of the first DMRS and the OCC corresponding to the first time-frequency resource in the OCC of the second DMRS.

In an implementation, the sending unit 401 is further configured to send second indication information, where the second indication information indicates, to a receiving device, at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the receiving device is a device that receives the first DMRS from the first DMRS port by using the first time-frequency resource.

It may be understood that for specific descriptions of functions of the units in the communication apparatus 40, refer to the method embodiments, for example, descriptions of related steps performed by the corresponding sending device in embodiments shown in FIG. 6 or FIG. 8 to FIG. 10. Details are not repeated.

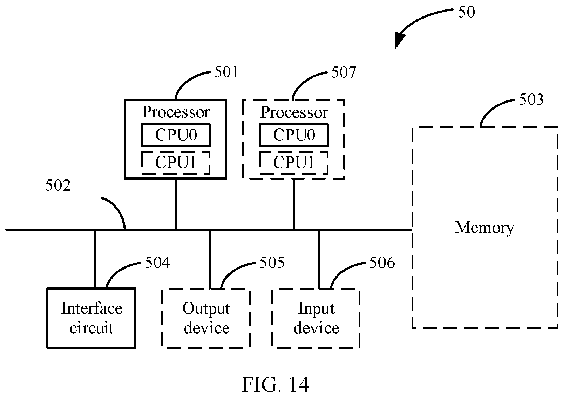

FIG. 14 is a schematic diagram of composition of a communication apparatus 50. The communication apparatus 50 includes: at least one processor 501 and at least one interface circuit 504. In addition, the communication apparatus 50 may further include a communication line 502 and a memory 503.

The processor 501 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 502 may include a path on which information is transmitted between the foregoing components.

The interface circuit 504 uses any apparatus such as a transceiver, and is configured to communicate with another device or a communication network, for example, the Ethernet, a radio access network (radio access network, RAN), or a wireless local area network (wireless local area networks, WLAN).

The memory 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be configured to carry or store expected program code in a form of instructions or a data structure and that can be accessed by a computer. However, the memory 503 is not limited thereto. The memory may exist independently, and connect to the processor through the communication line 502. Alternatively, the memory may be integrated with the processor.

The memory 503 is configured to store computer-executable instructions for performing the solutions in this application, and the processor 501 controls execution. The processor 501 is configured to execute the computer executable instructions stored in the memory 503, to implement the communication method provided in embodiments of this application.

For example, in some embodiments, when the processor 501 executes the instructions stored in the memory 503, the communication apparatus 50 is enabled to perform an operation that needs to be performed by the receiving device shown in FIG. 6 or FIG. 8 to FIG. 10.

In some other embodiments, when the processor 501 executes the instructions stored in the memory 503, the communication apparatus 50 is enabled to perform an operation that needs to be performed by the sending device shown in FIG. 6 or FIG. 8 to FIG. 10.

Optionally, computer-executable instructions in embodiments of this application may also be referred to as application program code. This is not specifically limited in embodiments of this application.

In a specific implementation, in an embodiment, the processor 501 may include one or more CPUs such as a CPU 0 and a CPU 1 in FIG. 14.

In a specific implementation, in an embodiment, the apparatus 50 may include a plurality of processors, for example, the processor 501 and a processor 507 shown in FIG. 14. Each of the processors may be a single-core (single-CPU) processor or a multi-core (multi-CPU) processor. The processor may be one or more devices, circuits, and/or processing cores configured to process data (for example, computer program instructions).

In a specific implementation, in an embodiment, the apparatus 50 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, or a projector (projector). The input device 506 communicates with the processor 501, and may receive user input in a plurality of manners. For example, the input device 506 may be a mouse, a keyboard, a touchscreen device, or a sensor device.

Embodiments of this application further provide a computer-readable storage medium. The computer-readable storage medium stores instructions. When the instructions are run, the method provided in embodiments of this application is performed. For example, when the instructions are run, an operation that needs to be performed by the receiving device shown in FIG. 6 or FIG. 8 to FIG. 10 is performed. Alternatively, when the instructions are run, another operation that needs to be performed by the sending device shown in FIG. 6 or FIG. 8 to FIG. 10 is performed.

Embodiments of this application further provide a computer program product including instructions. When the computer program product is run on a computer, the computer is enabled to perform the method provided in embodiments of this application. For example, when the computer program product including the instructions is run on a computer, the computer may perform an operation that needs to be performed by the receiving device in FIG. 6 or FIG. 8 to FIG. 10. Alternatively, when the computer program product including the instructions is run on a computer, the computer may perform another operation that needs to be performed by the sending device shown in FIG. 6 or FIG. 8 to FIG. 10.

Embodiments of this application further provide a chip. The chip includes a processing circuit and an interface. The processing circuit is configured to invoke, from the storage medium, and run the computer program stored in the storage medium, to enable the chip to perform the method provided in embodiments of this application.

Embodiments of this application further provide a communication system, including a receiving device and a sending device. The receiving device is configured to perform an operation performed by the receiving device in the foregoing embodiments, for example, perform an operation that needs to be performed by the receiving device shown in FIG. 6 or FIG. 8 to FIG. 10. The sending device is configured to perform an operation performed by the sending device in the foregoing embodiments, for example, perform an operation that needs to be performed by the sending device shown in FIG. 6 or FIG. 8 to FIG. 10.

All or a part of functions, actions, operations, steps, and the like in the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

**Claims**

1. A communication method, comprising:

   receiving (S202), by a receiving device, a first demodulation reference signal, DMRS, from a first DMRS port by using a first time-frequency resource, and receiving a second DMRS from a second DMRS port by using a second time-frequency resource, wherein
   the first time-frequency resource is a part of time-frequency resources in the second time-frequency resource, and an orthogonal cover code, OCC, of the first DMRS is orthogonal to an OCC corresponding to the first time-frequency resource in an OCC of the second DMRS;
   wherein the OCC of the first DMRS is the same as a result obtained after cyclic shift is performed on the OCC corresponding to the first time-frequency resource in the OCC of the second DMRS; and
   wherein a quantity of subcarriers comprised in the second time-frequency resource is P times a quantity of subcarriers comprised in the first time-frequency resource, and P is an integer greater than 1; and
   on an orthogonal frequency division multiplexing, OFDM, symbol in time domain, the first time-frequency resource comprises: a subcarrier set in which subcarriers are distributed at equal intervals in the subcarriers comprised in the second time-frequency resource; and two adjacent subcarriers in the subcarrier set are spaced by P-1 subcarriers comprised in the second time-frequency resource.

2. The method according to claim 1, wherein P=2; and the OCC of the first DMRS and the OCC corresponding to the first time-frequency resource in the OCC of the second DMRS meet the following formula 1:

$$s_1(m) = s_2(m) \cdot e^{j\frac{2\pi m \omega_1}{3M}}$$

formula 1

$s_1(m)$ represents an $m^{th}$ term in the OCC of the first DMRS, and $s_2(m)$ represents an $m^{th}$ term in the OCC corresponding to the first time-frequency resource in the OCC of the second DMRS; M represents a quantity of resource blocks, RBs, corresponding to the second DMRS that are in RBs carrying the second time-frequency resource and that are used for determining the OCC of the first DMRS through cyclic shift, and M is a multiple of 2; and $\omega_1$ represents a phase shift factor of the first DMRS.

3. The method according to claim 1 or 2, further comprising:

sending (S203), by the receiving device, first indication information, wherein the first indication information indicates, to a sending device, at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the sending device is a device that sends the first DMRS from the first DMRS port by using the first time-frequency resource; or
further comprising:
receiving, by the receiving device, second indication information from a sending device, wherein the second indication information indicates at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the sending device is a device that sends the first DMRS from the first DMRS port by using the first time-frequency resource.

4. A communication method, comprising:

sending (S201), by a sending device, a first demodulation reference signal, DMRS, from a first DMRS port by using a first time-frequency resource, wherein
the first time-frequency resource is comprised in a second time-frequency resource, the second time-frequency resource is a time-frequency resource used for mapping a second DMRS of a second DMRS port, and an orthogonal cover code, OCC, of the first DMRS is orthogonal to an OCC corresponding to the first time-frequency resource in an OCC of the second DMRS;
wherein the OCC of the first DMRS is the same as a result obtained after cyclic shift is performed on the OCC corresponding to the first time-frequency resource in the OCC of the second DMRS; and
wherein a quantity of subcarriers comprised in the second time-frequency resource is P times a quantity of subcarriers comprised in the first time-frequency resource, and P is an integer greater than 1; and
on an orthogonal frequency division multiplexing, OFDM, symbol in time domain, the first time-frequency resource comprises: a subcarrier set in which subcarriers are distributed at equal intervals in the subcarriers comprised in the second time-frequency resource; and two adjacent subcarriers in the subcarrier set are spaced by P-1 subcarriers comprised in the second time-frequency resource.

5. The method according to claim 4, wherein P=2; and the OCC of the first DMRS and the OCC corresponding to the first time-frequency resource in the OCC of the second DMRS meet the following formula 1:

$$s_1(m) = s_2(m) \cdot e^{j\frac{2\pi m \omega_1}{3M}}$$

formula 1

$s_1(m)$ represents an $m^{th}$ term in the OCC of the first DMRS, and $s_2(m)$ represents an $m^{th}$ term in the OCC corresponding to the first time-frequency resource in the OCC of the second DMRS; M represents a quantity of resource blocks, RBs, corresponding to the second DMRS that are in RBs carrying the second time-frequency resource and that are used for determining the OCC of the first DMRS through cyclic shift, and M is a multiple of 2; and $\omega_1$ represents a phase shift factor of the first DMRS.

6. The method according to claim 4 or 5, further comprising:

receiving, by the sending device, first indication information, wherein the first indication information indicates at least one of the phase shift factor of the first DMRS or a location of the first time-frequency resource in the second time-frequency resource; and the phase shift factor of the first DMRS is used for representing a phase difference between the OCC of the first DMRS and the OCC corresponding to the first time-frequency resource in the OCC of the second DMRS; or

further comprising:

sending (S204), by the sending device, second indication information, wherein the second indication information indicates, to a receiving device, at least one of the phase shift factor of the first DMRS or a location of the first time-frequency resource in the second time-frequency resource; the phase shift factor of the first DMRS is used for representing a phase difference between the OCC of the first DMRS and the OCC corresponding to the first time-frequency resource in the OCC of the second DMRS; and the receiving device is a device that receives the first DMRS from the first DMRS port by using the first time-frequency resource.

7. A receiving device, configured to perform the method according to any one of claims 1 to 3.

8. A sending device, configured to perform the method according to any one of claims 4 to 6.

9. A computer-readable storage medium, storing instructions, wherein when the instructions are run, the communication method provided in any one of claims 1 to 3 is performed, or the communication method provided in any one of claims 4 to 6 is performed.

10. A computer program product, comprising instructions, wherein when the instructions are run on a computer, the computer is enabled to perform the communication method according to any one of claims 1 to 3, or the computer is enabled to perform the communication method according to any one of claims 4 to 6.

11. A communication system, comprising a receiving device and a sending device, wherein

the receiving device is configured to perform the method according to any one of claims 1 to 3; and
the sending device is configured to perform the method according to any one of claims 4 to 6.


**Patentansprüche**

1. Kommunikationsverfahren, Folgendes umfassend:

Empfangen (S202) eines ersten Demodulationsreferenzsignals (demodulation reference signal, DMRS) von einem ersten DMRS-Anschluss unter Verwendung einer ersten Zeit-Frequenz-Ressource und Empfangen eines zweiten DMRS von einem zweiten DMRS-Anschluss unter Verwendung einer zweiten Zeit-Frequenz-Ressource durch eine Empfangsvorrichtung, wobei

die erste Zeit-Frequenz-Ressource ein Teil von Zeit-Frequenz-Ressourcen in der zweiten Zeit-Frequenz-Ressource ist, und ein orthogonaler Abdeckungscode (orthogonal cover code, OCC) des ersten DMRS orthogonal zu einem OCC ist, der der ersten Zeit-Frequenz-Ressource in einem OCC des zweiten DMRS entspricht;

wobei der OCC des ersten DMRS gleich einem Ergebnis ist, das erlangt wird, nachdem zyklische Verschiebung an dem OCC durchgeführt wird, der der ersten Zeit-Frequenz-Ressource in dem OCC des zweiten DMRS entspricht; und

wobei eine Menge von Unterträgern, die in der zweiten Zeit-Frequenz-Ressource umfasst ist, das P-fache einer Menge von Unterträgern ist, die in der ersten Zeit-Frequenz-Ressource umfasst ist, und P eine ganze Zahl größer als 1 ist; und

bei einem Symbol des orthogonalen Frequenzmultiplexverfahrens (orthogonal frequency division multiplexing, OFDM) in der Zeitdomäne die erste Zeit-Frequenz-Ressource Folgendes umfasst: einen Unterträgersatz, in dem Unterträger in gleichmäßigen Intervallen in den Unterträgern verteilt sind, die in der zweiten Zeit-Frequenz-Ressource umfasst sind; und wobei zwei benachbarte Unterträger in dem Unterträgersatz durch P-1 Unterträger beabstandet sind, die in der zweiten Zeit-Frequenz-Ressource umfasst sind.

2. Verfahren gemäß Anspruch 1, wobei P=2; und der OCC des ersten DMRS und der OCC, der der ersten Zeit-Frequenz-Ressource in dem OCC des zweiten DMRS entspricht, die folgende Formel 1 erfüllen:

$$s_1(m) = s_2(m) \cdot e^{j\frac{2\pi m \omega_1}{3M}}$$

Formel 1

s₁(m) stellt einen m-ten Term in dem OCC des ersten DMRS dar, und s₂(m) stellt einen m-ten Term in dem OCC dar, der der ersten Zeit-Frequenz-Ressource in dem OCC des zweiten DMRS entspricht; M stellt eine Menge von Ressourcenblöcken (resource blocks, RBs) dar, die dem zweiten DMRS entspricht, die in RBs sind, die die zweite Zeit-Frequenz-Ressource tragen und die zum Bestimmen des OCC des ersten DMRS durch zyklisches Verschieben verwendet werden, und M ist ein Vielfaches von 2; und ω₁ stellt einen Phasenverschiebungsfaktor des ersten DMRS dar.

3. Verfahren gemäß Anspruch 1 oder 2, ferner Folgendes umfassend:

Senden (S203) von ersten Anzeigeinformationen durch die Empfangsvorrichtung, wobei die ersten Anzeigeinformationen einer Sendevorrichtung mindestens einen von dem Phasenverschiebungsfaktor des ersten DMRS oder einem Standort der ersten Zeit-Frequenz-Ressource in der zweiten Zeit-Frequenz-Ressource anzeigen; wobei der Phasenverschiebungsfaktor des ersten DMRS dazu verwendet wird, eine Phasendifferenz zwischen dem OCC des ersten DMRS und dem OCC, der der ersten Zeit-Frequenz-Ressource in dem OCC des zweiten DMRS entspricht, darzustellen; und die Sendevorrichtung eine Vorrichtung ist, die das erste DMRS von dem ersten DMRS-Anschluss unter Verwendung der ersten Zeit-Frequenz-Ressource sendet; oder
ferner Folgendes umfassend:
Empfangen von zweiten Anzeigeinformationen von einer Sendevorrichtung durch die Empfangsvorrichtung, wobei die zweiten Anzeigeinformationen mindestens einen von dem Phasenverschiebungsfaktor des ersten DMRS oder einem Standort der ersten Zeit-Frequenz-Ressource in der zweiten Zeit-Frequenz-Ressource anzeigen; wobei der Phasenverschiebungsfaktor des ersten DMRS dazu verwendet wird, eine Phasendifferenz zwischen dem OCC des ersten DMRS und dem OCC, der der ersten Zeit-Frequenz-Ressource in dem OCC des zweiten DMRS entspricht, darzustellen; und die Sendevorrichtung eine Vorrichtung ist, die das erste DMRS von dem ersten DMRS-Anschluss unter Verwendung der ersten Zeit-Frequenz-Ressource sendet.

4. Kommunikationsverfahren, Folgendes umfassend:

Senden (S201) eines ersten Demodulationsreferenzsignals, DMRS, von einem ersten DMRS-Anschluss durch eine Sendevorrichtung unter Verwendung einer ersten Zeit-Frequenz-Ressource, wobei
die erste Zeit-Frequenz-Ressource in einer zweiten Zeit-Frequenz-Ressource umfasst ist, die zweite Zeit-Frequenz-Ressource eine Zeit-Frequenz-Ressource ist, die zum Zuordnen eines zweiten DMRS eines zweiten DMRS-Anschlusses verwendet wird, und ein orthogonaler Abdeckungscode, OCC, des ersten DMRS orthogonal zu einem OCC ist, der der ersten Zeit-Frequenz-Ressource in einem OCC des zweiten DMRS entspricht; wobei der OCC des ersten DMRS gleich einem Ergebnis ist, das erlangt wird, nachdem zyklische Verschiebung an dem OCC durchgeführt wird, der der ersten Zeit-Frequenz-Ressource in dem OCC des zweiten DMRS entspricht; und
wobei eine Menge von Unterträgern, die in der zweiten Zeit-Frequenz-Ressource umfasst ist, das P-fache einer Menge von Unterträgern ist, die in der ersten Zeit-Frequenz-Ressource umfasst ist, und P eine ganze Zahl größer als 1 ist; und
bei einem Symbol des orthogonalen Frequenzmultiplexverfahrens, OFDM, in der Zeitdomäne die erste Zeit-Frequenz-Ressource Folgendes umfasst: einen Unterträgersatz, in dem Unterträger in gleichmäßigen Intervallen in den Unterträgern verteilt sind, die in der zweiten Zeit-Frequenz-Ressource umfasst sind; und wobei zwei benachbarte Unterträger in dem Unterträgersatz durch P-1 Unterträger beabstandet sind, die in der zweiten Zeit-Frequenz-Ressource umfasst sind.

5. Verfahren gemäß Anspruch 4, wobei P=2; und der OCC des ersten DMRS und der OCC, der der ersten Zeit-Frequenz-Ressource in dem OCC des zweiten DMRS entspricht, die folgende Formel 1 erfüllen:

$$s_1(m) = s_2(m) \cdot e^{j\frac{2\pi m \omega_1}{3M}}$$

Formel 1

s₁(m) stellt einen m-ten Term in dem OCC des ersten DMRS dar, und s₂ (m) stellt einen m-ten Term in dem OCC dar, der der ersten Zeit-Frequenz-Ressource in dem OCC des zweiten DMRS entspricht; M stellt eine Menge von Ressourcenblöcken, RBs, dar, die dem zweiten DMRS entspricht, die in RBs sind, die die zweite Zeit-Frequenz-Ressource tragen und die zum Bestimmen des OCC des ersten DMRS durch zyklisches Verschieben verwendet werden, und M ist ein Vielfaches von 2; und $\omega_1$ stellt einen Phasenverschiebungsfaktor des ersten DMRS dar.

6. Verfahren gemäß Anspruch 4 oder 5, ferner Folgendes umfassend:

   Empfangen von ersten Anzeigeinformationen durch die Sendevorrichtung, wobei die ersten Anzeigeinformationen mindestens einen von dem Phasenverschiebungsfaktor des ersten DMRS oder einem Standort der ersten Zeit-Frequenz-Ressource in der zweiten Zeit-Frequenz-Ressource anzeigen; und wobei der Phasenverschiebungsfaktor des ersten DMRS dazu verwendet wird, eine Phasendifferenz zwischen dem OCC des ersten DMRS und dem OCC, der der ersten Zeit-Frequenz-Ressource in dem OCC des zweiten DMRS entspricht, darzustellen; oder
   ferner Folgendes umfassend:
   Senden (S204) von zweiten Anzeigeinformationen durch die Sendevorrichtung, wobei die zweiten Anzeigeinformationen einer Empfangsvorrichtung mindestens einen von dem Phasenverschiebungsfaktor des ersten DMRS oder einem Standort der ersten Zeit-Frequenz-Ressource in der zweiten Zeit-Frequenz-Ressource anzeigen; wobei der Phasenverschiebungsfaktor des ersten DMRS dazu verwendet wird, eine Phasendifferenz zwischen dem OCC des ersten DMRS und dem OCC, der der ersten Zeit-Frequenz-Ressource in dem OCC des zweiten DMRS entspricht, darzustellen; und die Empfangsvorrichtung eine Vorrichtung ist, die das erste DMRS von dem ersten DMRS-Anschluss unter Verwendung der ersten Zeit-Frequenz-Ressource empfängt.

7. Empfangsvorrichtung, die dazu konfiguriert ist, das Verfahren gemäß einem der Ansprüche 1 bis 3 durchzuführen.

8. Sendevorrichtung, die dazu konfiguriert ist, das Verfahren gemäß einem der Ansprüche 4 bis 6 durchzuführen.

9. Computerlesbares Speichermedium, das Anweisungen speichert, wobei, wenn die Anweisungen ausgeführt werden, das Kommunikationsverfahren gemäß einem der Ansprüche 1 bis 3 durchgeführt wird oder das Kommunikationsverfahren gemäß einem der Ansprüche 4 bis 6 durchgeführt wird.

10. Computerprogrammprodukt, umfassend Anweisungen, wobei, wenn die Anweisungen auf einem Computer ausgeführt werden, der Computer in die Lage versetzt wird, das Kommunikationsverfahren gemäß einem der Ansprüche 1 bis 3 durchzuführen, oder der Computer in die Lage versetzt wird, das Kommunikationsverfahren gemäß einem der Ansprüche 4 bis 6 durchzuführen.

11. Kommunikationssystem, umfassend eine Empfangsvorrichtung und eine Sendevorrichtung, wobei

    die Empfangsvorrichtung dazu konfiguriert ist, das Verfahren gemäß einem der Ansprüche 1 bis 3 durchzuführen; und
    die Sendevorrichtung dazu konfiguriert ist, das Verfahren gemäß einem der Ansprüche 4 bis 6 durchzuführen.

**Revendications**

1. Procédé de communication, comprenant :

   la réception (S202), par un dispositif de réception, d'un premier signal de référence de démodulation, DMRS, à partir d'un premier port DMRS à l'aide d'une première ressource temps-fréquence, et la réception d'un second DMRS à partir d'un second port DMRS à l'aide d'une seconde ressource temps-fréquence, dans lequel
   la première ressource temps-fréquence est une partie de ressources temps-fréquence dans la seconde ressource temps-fréquence, et un code de couverture orthogonal, OCC, du premier DMRS est orthogonal à un OCC correspondant à la première ressource temps-fréquence dans un OCC du second DMRS ;
   dans lequel l'OCC du premier DMRS est le même que le résultat obtenu après la réalisation du décalage cyclique sur l'OCC correspondant à la première ressource temps-fréquence dans l'OCC du second DMRS ; et
   dans lequel une quantité de sous-porteuses comprises dans la seconde ressource temps-fréquence est P fois une quantité de sous-porteuses comprises dans la première ressource temps-fréquence, et P est un entier supérieur à 1 ; et
   sur un symbole de multiplexage par répartition orthogonale de la fréquence, OFDM, dans le domaine temporel, la première ressource temps-fréquence comprend : un ensemble de sous-porteuses dans lequel des sous-porteuses sont réparties à intervalles égaux dans les sous-porteuses comprises dans la seconde ressource temps-fréquence ; et deux sous-porteuses adjacentes dans l'ensemble de sous-porteuses sont espacées par P-1 sous-porteuses comprises dans la seconde ressource temps-fréquence.

**2.** Procédé selon la revendication 1, dans lequel P=2 ; et l'OCC du premier DMRS et l'OCC correspondant à la première ressource temps-fréquence dans l'OCC du second DMRS répondent à la formule 1 suivante :

$$s_1(m) = s_2(m) \cdot e^{j2\pi m\omega_1/3M}$$

formule 1

$s_1(m)$ représente un m$^{ème}$ terme dans l'OCC du premier DMRS, et $s_2(m)$ représente un m$^{ème}$ terme dans l'OCC correspondant à la première ressource temps-fréquence dans l'OCC du second DMRS ; M représente une quantité de blocs de ressources, RB, correspondant au second DMRS qui sont en RB portant la seconde ressource temps-fréquence et qui sont utilisés pour déterminer l'OCC du premier DMRS par décalage cyclique, et M est un multiple de 2 ; et $\omega_1$ représente un facteur de décalage de phase du premier DMRS.

**3.** Procédé selon la revendication 1 ou 2, comprenant également :

l'envoi (S203), par le dispositif de réception, des premières informations d'indication, dans lequel les premières informations d'indication indiquent, à un dispositif d'envoi, au moins l'un du facteur de déphasage du premier DMRS ou d'un emplacement de la première ressource temps-fréquence dans la seconde ressource temps-fréquence ; le facteur de déphasage du premier DMRS est utilisé pour représenter une différence de phase entre l'OCC du premier DMRS et l'OCC correspondant à la première ressource temps-fréquence dans l'OCC du second DMRS ; et le dispositif d'envoi est un dispositif qui envoie le premier DMRS à partir du premier port DMRS à l'aide de la première ressource temps-fréquence ; ou
comprenant également :
la réception, par le dispositif de réception, des secondes informations d'indication à partir d'un dispositif d'envoi, dans lequel les secondes informations d'indication indiquent au moins l'un du facteur de déphasage du premier DMRS ou d'un emplacement de la première ressource temps-fréquence dans la seconde ressource temps-fréquence ; le facteur de déphasage du premier DMRS est utilisé pour représenter une différence de phase entre l'OCC du premier DMRS et l'OCC correspondant à la première ressource temps-fréquence dans l'OCC du second DMRS ; et le dispositif d'envoi est un dispositif qui envoie le premier DMRS à partir du premier port DMRS à l'aide de la première ressource temps-fréquence.

**4.** Procédé de communication, comprenant :

l'envoi (S201), par un dispositif d'envoi, d'un premier signal de référence de démodulation, DMRS, à partir d'un premier port DMRS à l'aide d'une première ressource temps-fréquence, dans lequel
la première ressource temps-fréquence est comprise dans une seconde ressource temps-fréquence, la seconde ressource temps-fréquence est une ressource temps-fréquence utilisée pour mapper un second DMRS d'un second port DMRS, et un code de couverture orthogonal, OCC, du premier DMRS est orthogonal à un OCC correspondant à la première ressource temps-fréquence dans un OCC du second DMRS ;
dans lequel l'OCC du premier DMRS est le même que le résultat obtenu après la réalisation du décalage cyclique sur l'OCC correspondant à la première ressource temps-fréquence dans l'OCC du second DMRS ; et
dans lequel une quantité de sous-porteuses comprises dans la seconde ressource temps-fréquence est P fois une quantité de sous-porteuses comprises dans la première ressource temps-fréquence, et P est un entier supérieur à 1 ; et
sur un symbole de multiplexage par répartition orthogonale de la fréquence, OFDM, dans le domaine temporel, la première ressource temps-fréquence comprend : un ensemble de sous-porteuses dans lequel des sous-porteuses sont réparties à intervalles égaux dans les sous-porteuses comprises dans la seconde ressource temps-fréquence ; et deux sous-porteuses adjacentes dans l'ensemble de sous-porteuses sont espacées par P-1 sous-porteuses comprises dans la seconde ressource temps-fréquence.

**5.** Procédé selon la revendication 4, dans lequel P=2 ; et l'OCC du premier DMRS et l'OCC correspondant à la première ressource temps-fréquence dans l'OCC du second DMRS répondent à la formule 1 suivante :

$$s_1(m) = s_2(m) \cdot e^{j2\pi m\omega_1/3M}$$

```
formule 1
```

$s_1(m)$ représente un $m^{\text{ème}}$ terme dans l'OCC du premier DMRS, et $s_2(m)$ représente un $m^{\text{ème}}$ terme dans l'OCC correspondant à la première ressource temps-fréquence dans l'OCC du second DMRS ; M représente une quantité de blocs de ressources, RB, correspondant au second DMRS qui sont en RB portant la seconde ressource temps-fréquence et qui sont utilisés pour déterminer l'OCC du premier DMRS par décalage cyclique, et M est un multiple de 2 ; et $\omega_1$ représente un facteur de décalage de phase du premier DMRS.

**6.** Procédé selon la revendication 4 ou 5, comprenant également :

la réception, par le dispositif d'envoi, des premières informations d'indication, dans lequel les premières informations d'indication indiquent au moins l'un du facteur de déphasage du premier DMRS ou d'un emplacement de la première ressource temps-fréquence dans la seconde ressource temps-fréquence ; et le facteur de déphasage du premier DMRS est utilisé pour représenter une différence de phase entre l'OCC du premier DMRS et l'OCC correspondant à la première ressource temps-fréquence dans l'OCC du second DMRS ; ou comprenant également :
l'envoi (S204), par le dispositif d'envoi, des secondes informations d'indication, dans lequel les secondes informations d'indication indiquent, à un dispositif de réception, au moins l'un du facteur de déphasage du premier DMRS ou d'un emplacement de la première ressource temps-fréquence dans la seconde ressource temps-fréquence ; le facteur de déphasage du premier DMRS est utilisé pour représenter une différence de phase entre l'OCC du premier DMRS et l'OCC correspondant à la première ressource temps-fréquence dans l'OCC du second DMRS ; et le dispositif de réception est un dispositif qui reçoit le premier DMRS à partir du premier port DMRS à l'aide de la première ressource temps-fréquence.

**7.** Dispositif de réception, configuré pour réaliser le procédé selon l'une quelconque des revendications 1 à 3.

**8.** Dispositif d'envoi, configuré pour réaliser le procédé selon l'une quelconque des revendications 4 à 6.

**9.** Support de stockage lisible par ordinateur, stockant des instructions, dans lequel, lorsque les instructions sont exécutées, le procédé de communication selon l'une quelconque des revendications 1 à 3 est réalisé, ou le procédé de communication selon l'une quelconque des revendications 4 à 6 est réalisé.

**10.** Produit-programme d'ordinateur, comprenant des instructions, dans lequel, lorsque les instructions sont exécutées sur un ordinateur, l'ordinateur est autorisé à réaliser le procédé de communication selon l'une quelconque des revendications 1 à 3, ou l'ordinateur est autorisé à réaliser le procédé de communication selon l'une quelconque des revendications 4 à 6.

**11.** Système de communication, comprenant un dispositif de réception et un dispositif d'envoi, dans lequel le dispositif de réception est configuré pour réaliser le procédé selon l'une quelconque des revendications 1 à 3 ; et le dispositif d'envoi est configuré pour réaliser le procédé selon l'une quelconque des revendications 4 à 6.

FIG. 1

CDM group 1={p2/p3}

CDM group 0={p0/p1}

CDM group 1={p2/p3/p6/p7}

CDM group 0={p0/p1/p4/p5}

(a)

(b)

FIG. 2

CDM group 1={p4/p5}

CDM group 1={p2/p3}

CDM group 0={p0/p1}

CDM group 1={p4/p5/p10/p11}

CDM group 1={p2/p3/p8/p9}

CDM group 0={p0/p1/p6/p7}

(a)

(b)

FIG. 3

FIG. 4

FIG. 5

FIG. 6

First group of REs
Second group of REs
Third group of REs

CDM group 0={p0/p1/p4/p5}

CDM group 1={p2/p3/p6/p7}

FIG. 7

Sending device

Receiving device

S203: The receiving device sends first indication information

S201: The sending device sends a first DMRS from a first DMRS port by using a first time-frequency resource

S202: The receiving device receives the first DMRS from the first DMRS port by using the first time-frequency resource, and receives a second DMRS from a second DMRS port by using a second time-frequency resource

FIG. 8

Sending device

Receiving device

S204: The sending device sends second indication information

S201: The sending device sends a first DMRS from a first DMRS port by using a first time-frequency resource

S202: The receiving device receives the first DMRS from the first DMRS port by using the first time-frequency resource, and receives a second DMRS from a second DMRS port by using a second time-frequency resource

FIG. 9

Sending device

Receiving device

S201: The sending device sends a first DMRS from a first DMRS port by using a first time-frequency resource

S205: The sending device sends a third DMRS from a third DMRS port by using the first time-frequency resource

S202: The receiving device receives the first DMRS from the first DMRS port by using the first time-frequency resource, and receives a second DMRS from a second DMRS port by using a second time-frequency resource

FIG. 10

Sending
device

Receiving
device

S201: The sending device sends a first
DMRS from a first DMRS port by
using a first time-frequency resource

S206: The sending device sends a fourth
DMRS from a fourth DMRS port by
using a third time-frequency resource

S202: The receiving device
receives the first DMRS from the
first DMRS port by using the first
time-frequency resource, and
receives a second DMRS from a
second DMRS port by using a
second time-frequency resource

FIG. 11

30

| Receiving unit | Sending unit |
| 301 | 302 |

FIG. 12

40

| Sending unit | Receiving unit |
| 401 | 402 |

FIG. 13

FIG. 14

**EP 4 199 405 B1**

**Non-patent literature cited in the description**

- **INTEL CORPORATION**. Further discussion on SRS for NR. *3GPP Draft; RI-1700356*